(19) Europäisches Patentamt
European Patent Office
Office européen des brevets

(11) **EP 4 242 599 B1**

(12) **EUROPÄISCHE PATENTSCHRIFT**

(45) Veröffentlichungstag und Bekanntmachung des Hinweises auf die Patenterteilung:
**25.09.2024 Patentblatt 2024/39**

(21) Anmeldenummer: **23160055.2**

(22) Anmeldetag: **03.03.2023**

(51) Internationale Patentklassifikation (IPC):
***G01F 1/66*** *(2022.01)*

(52) Gemeinsame Patentklassifikation (CPC):
**G01F 1/662**

(54) **MESSEINRICHTUNG UND VERFAHREN ZUR ERMITTLUNG EINER MESSGRÖSSE**

MEASURING DEVICE AND METHOD FOR DETERMINING A MEASUREMENT VALUE

DISPOSITIF DE MESURE ET PROCÉDÉ DE DÉTERMINATION D'UNE GRANDEUR DE MESURE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **10.03.2022 DE 102022105644**

(43) Veröffentlichungstag der Anmeldung:
**13.09.2023 Patentblatt 2023/37**

(73) Patentinhaber: **Diehl Metering GmbH**
**91522 Ansbach (DE)**

(72) Erfinder:
• **Mayle, Michael**
**91522 Ansbach (DE)**
• **Benkert, Andreas**
**91522 Ansbach (DE)**
• **Sonnenberg, Hans-Michael**
**91564 Neuendettelsau (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**EP-A1- 3 910 296      DE-C2- 3 522 771**
**JP-A- 2020 106 343    US-A- 4 336 719**

EP 4 242 599 B1

**Beschreibung**

Die Erfindung betrifft eine Messeinrichtung zur Ermittlung einer Messgröße, mit einem ersten und zweiten Ultraschallwandler, einer Steuereinrichtung, die dazu eingerichtet ist, den ersten Ultraschallwandler derart anzusteuern, dass der erste Ultraschallwandler eine geführte Welle mit einer vorgegebenen Schwingungsfrequenz **f** in einem mit dem ersten Ultraschallwandler schwingungsgekoppelten Wellenleiter der Messeinrichtung derart anregt, dass die geführte Welle sich in dem Wellenleiter parallel zu einer Rückfläche des Wellenleiters ausbreitet, wobei die Steuereinrichtung dazu eingerichtet ist, die Messgröße in Abhängigkeit eines Empfangssignals des zweiten Ultraschallwandlers zu ermitteln, wobei das Empfangssignal von unmittelbar und/oder mittelbar durch die geführte Welle verursachten Schwingungen des zweiten Ultraschallwandlers abhängt. Daneben betrifft die Erfindung ein Verfahren zur Ermittlung einer Messgröße.

Eine Möglichkeit, einen Durchfluss durch ein Messrohr zu messen, sind Ultraschallzähler. Bei diesen wird ein Ultraschallwandler genutzt, um eine Druckwelle in das durch das Messrohr strömende Fluid einzukoppeln, wobei diese auf einen geraden Weg oder nach mehreren Reflexionen zu einem zweiten Ultraschallwandler geführt wird. Aus der Laufzeit der Ultraschallwelle bzw. aus dem Laufzeitunterschied bei einer Vertauschung von Sender und Empfänger kann eine Durchflussgeschwindigkeit für das Fluid und somit bei bekannter Messkanalgeometrie ein Durchflussvolumen bestimmt werden. Auf Basis von empfangenen Ultraschallwellen können auch andere Parameter des Fluids ermittelt werden, beispielsweise eine Fluidzusammensetzung oder eine Temperatur. Das Grundprinzip, nämlich das Einstrahlen von Ultraschallwellen in das Medium und eine Auswertung der Ultraschallwelle nach Durchlaufen des Mediums, kann beispielsweise auch zur Materialprüfung und zu ähnlichen Zwecken genutzt werden.

In einigen Anwendungsfällen kann es vorteilhaft sein, Ultraschallwellen nicht unmittelbar in ein Fluid oder ein anderes Medium einzukoppeln, um Messgrößen zu erfassen, sondern die Druckwelle im Fluid durch eine in einem Wellenleiter geführte Lamb-Welle anzuregen. Die Lamb-Welle kann beispielsweise durch einen rückseitig oder stirnseitig an dem Wellenleiter angeordneten Ultraschallwandler angeregt werden. Die Patentanmeldung JP 2020 1 06343A offenbart ein Ultraschallmessverfahren, bei dem geführte Wellen, die in einem Gasraum lecken, reflektiert und als geführte Wellen zurückgewandelt werden. Die Ultraschallgeschwindigkeit der sich im Gas ausbreitenden Leckwellen wird unter Verwendung eines bekannten Ausbreitungsabstands berechnet.

Die Nutzung dieses Prinzips in einem Messkapselzähler ist z.B. aus der Druckschrift DE 10 2020 002 834 A1 bekannt. In dieser Druckschrift liegt die vom Fluidvolumen abgewandte Rückfläche des Wellenleiters entweder frei oder wird unmittelbar durch eine Gehäusewand abgestützt. Bei einer Abstützung durch die Gehäusewand sind die nutzbaren Gehäusematerialien jedoch stark eingeschränkt, da insbesondere bei Nutzung von Materialen mit hoher akustischer Feldimpedanz, also beispielsweise von Metall oder faserverstärkten Kunststoffen, eine starke Störung der Lamb-Welle und somit z.B. eine starke Absenkung der Amplitude von Empfangssignalen resultieren kann. Auch eine freiliegende Rückfläche des Wellenleiters kann jedoch problematisch sein, da beispielsweise ein Kondensieren von Flüssigkeiten auf dieser Rückfläche die Messung beeinträchtigen kann, so dass potentiell aufwendige Maßnahmen zum Schutz der Rückfläche vor Umwelteinflüssen erforderlich sind. Zudem sind, da der Wellenleiter typischerweise aus dünnem Blech gefertigt ist, in diesem Fall nur relativ geringe Drücke in der Messstrecke nutzbar.

Der Erfindung liegt daher die Aufgabe zugrunde, eine Messeinrichtung für Ultraschallmessungen anzugeben, bei der eine Wellenführung durch einen Wellenleiter erfolgt, jedoch die obig genannten Nachteile vermieden oder zumindest abgemildert werden. Insbesondere soll die Messeinrichtung auch für hohe Drücke an der Vorderfläche des Wellenleiters geeignet sein und/oder es sollen auch Gehäusematerialien mit hoher akustischer Feldimpedanz, beispielsweise metallische Gehäuse, nutzbar sein.

Die Aufgabe wird erfindungsgemäß durch eine Messeinrichtung der eingangs genannten Art gelöst, wobei die Rückfläche des Wellenleiters zumindest in einem Wellenführungsabschnitt des Wellenleiters einer Reflexionsfläche der Messeinrichtung zugewandt und von dieser durch einen Zwischenraum beabstandet ist, wobei die Messeinrichtung derart ausgelegt ist, dass zumindest während der Ermittlung der Messgröße eine Fluidschicht oder ein Festkörper den Zwischenraum zwischen dem Wellenleiter und der Reflexionsfläche zumindest im Wellenführungsabschnitt des Wellenleiters ausfüllt, wobei der Abstand zwischen der Rückfläche und der Reflexionsfläche und somit die Dicke D der Fluidschicht oder des Festkörpers zumindest in dem Wellenführungsabschnitt den Zusammenhang

$$D = \frac{2(n \pm \Delta) - 1}{4f\sqrt{\dfrac{1}{c_f^2} - \dfrac{1}{c_{ph}^2}}}$$

mit der Schwingungsfrequenz **f,** der Schallgeschwindigkeit **c_f** in der Fluidschicht oder dem Festkörper und der Phasengeschwindigkeit **c_ph** im Wellenleiter aufweist, wobei die Auslegungsvariable **n** eine ganze positive Zahl und die Abweichung Δ einerseits gleich Null oder andererseits positiv und kleiner als 0,7 als 0,5 ist.

Im Rahmen der Erfindung wurde durch zahlreiche Simulationen und Versuche erkannt, dass, insbesondere bei geeigneter Wahl der Fluidschicht bzw. des Festkörpers und der Reflexionsfläche, bei bestimmten Abständen bzw. Dicken der Fluidschicht bzw. des Festkörpers, insbesondere bei einer Abweichung Δ von ungefähr Null in der obigen Formel, eine Lamb-Welle im Wellenleiter im Wesentlichen ungestört bleibt. Durch Nutzung einer wenig kompressiblen Fluidschicht bzw. eines wenig kompressiblen Festkörpers bzw. durch Einstellung eines ähnlichen Drucks an Vorder- und Rückfläche des Wellenleiters kann somit eine robuste Abstützung des Wellenleiters an der Reflexionsfläche erreicht werden. Hierbei können insbesondere Reflexionsflächen aus Materialien mit hoher akustischer Feldimpedanz, beispielsweise aus Metall oder gefülltem Kunststoff, genutzt werden, womit die obig erläuterten Probleme bezüglich der Materialauswahl einer Stützfläche für den Wellenleiter vermieden werden.

Wird hingegen in obiger Formel eine Abweichung Δ von ungefähr 1 eingesetzt, würde bei der resultierenden Dicke der Fluidschicht bzw. des Festkörpers eine starke Beeinflussung der geführten Lamb-Welle auftreten, die typischerweise zu einer erheblichen Reduktion der Empfangsamplitude am zweiten Ultraschallwandler führt. Je nach Feldimpedanz des Materials der Reflexionsfläche ergab sich hierbei in Simulationen eine Reduktion um einen Faktor von ca. 4 bis 8. Da die Abhängigkeit der Empfangsamplitude von der Dicke **D** für jedes positive ganzzahlige **n** jedoch ein breites Maximum um eine Abweichung Δ = 0 aufweist, werden für Abweichungen Δ kleiner als 0,7 typischerweise zumindest 50 % der maximalen Empfangsamplitude, die bei einer Abweichung Δ von Null auftritt, erreicht. Daher können relativ große Toleranzen bei der Herstellung der Messeinrichtung zulässig sein bzw. der angegebene Dickenbereich kann beispielsweise genutzt werden, um Druckmessungen durchzuführen, wie später noch erläutert werden wird. Besonders vorteilhaft wird die Abweichung Δ jedoch kleiner als 0,5 oder kleiner als 0,3 oder kleiner als 0,2 gewählt, um hohe Empfangsamplituden und somit ein gutes Signal-zu-RauschVerhältnis zu erreichen. Die Dicke **D** bzw. der Abstand zwischen Reflexionsfläche und Rückfläche kann insbesondere wenigstens 0,2 mm oder wenigstens 0,3 mm sein.

Die Reflexionsfläche und die Rückfläche können zumindest näherungsweise bzw. im Rahmen von Bauteil- bzw. Fertigungstoleranzen parallel zueinander verlaufen, so dass im gesamten Wellenführungsabschnitt ein im Wesentlichen konstanter Abstand zwischen Reflexionsfläche und Rückfläche und somit eine im Wesentlichen konstante Dicke **D** resultieren. Es ist jedoch auch möglich, dass der Abstand und somit die Dicke der Fluidschicht bzw. des Festkörpers innerhalb der oben genannten Grenzen für die Dicke **D** variiert, wobei die Variation insbesondere derart eingeschränkt sein kann, dass die Auslegungsvariable **n** konstant bleibt und nur die Abweichung Δ innerhalb der oben genannten Grenzen variieren kann. Insbesondere kann die Variation des Abstandes zwischen Reflexionsfläche und Rückfläche innerhalb des Wellenführungsabschnitts kleiner oder gleich 0,1 mm oder 0,2 mm sein.

Der Wellenführungsabschnitt kann sich prinzipiell über die gesamte Länge des Wellenleiters bzw. den gesamten Pfad zwischen dem ersten und zweiten Ultraschallwandler erstrecken. Typischerweise wird jedoch ein Wellenführungsabschnitt genutzt, der sich nur über einen Abschnitt des Wellenleiters erstreckt, beispielsweise um die Ultraschallwandler außerhalb des Wellenführungsabschnitts fluiddicht zu kapseln und/oder den Wellenleiter abzustützen. So kann z.B. ein Teil des Ausbreitungspfades der geführten Welle außerhalb des Wellenführungsabschnitts liegen. Da eine geringe Beeinflussung der geführten Welle über möglichst große Teile des Ausbreitungspfades gewünscht ist und dies insbesondere im Wellenführungsabschnitt erreicht wird, kann es vorteilhaft sein, zumindest 20 % oder zumindest 40% der Länge des Wellenleiters als Wellenführungsabschnitt auszugestalten, also dort den wie obig erläutert ausgestalteten Zwischenraum, der die Fluidschicht bzw. den Festkörper aufnimmt, vorzusehen.

Die geführte Welle kann insbesondere zumindest näherungsweise modenrein bzw. modenselektiv angeregt werden. Beispielsweise kann die Amplitude einer gewünschten Schwingungsmode, beispielsweise der S0- oder A0-Mode einer Lamb-Welle, wenigsten um den Faktor 3 oder 10 größer sein als die Amplitude aller anderen angeregten Moden. Die Phasengeschwindigkeit **c**$_{ph}$ kann insbesondere die Phasengeschwindigkeit der gewünschten Schwingungsmode sein. Verschiedene nutzbare Ansätze zur modenselektiven Anregung sind z.B. der bereits genannten Druckschrift DE 10 2020 002 834 A1 zu entnehmen.

Wie bereits erwähnt kann sich die Messgröße auf ein Fluid oder ein anderes System beziehen, das die von der Rückfläche abgewandte Vorderfläche des Wellenleiters kontaktiert. Ergänzend oder alternativ kann jedoch auch eine Messgröße ermittelt werden, die die Fluidschicht bzw. den Festkörper betrifft. So wurde festgestellt, dass die Temperatur und Dichte der Fluidschicht bzw. des Festkörpers jeweils die Amplitude, Laufzeit und Phasenlage des Empfangssignals beeinflussen und somit beispielsweise in Kenntnis des jeweils anderen Parameters aus einer der genannten Größen ermittelt werden können.

In der angegebenen Formel zur Vorgabe der Dicke **D** kann von einer Temperatur von 20 °C und gleichem Druck an Vorder- und Rückfläche des Wellenleiters ausgegangen werden. Ist eine Messeinrichtung jedoch für einen Einsatz bei einer anderen erwarteten Temperatur bzw. bei anderen erwarteten Druckverhältnissen konzipiert, können die Schall- bzw. Phasengeschwindigkeit bei der erwarteten Temperatur herangezogen werden und/oder die Dicke kann für die erwarteten Druckverhältnisse vorgegeben werden.

Unter einem Ausfüllen des Zwischenraums zwischen dem Wellenleiter und der Reflexionsfläche zumindest im Wellenführungsabschnitt wird vorliegend eine im Wesentlichen spaltfreie bzw. im Wesentlichen vollständige Ausfüllung betrachtet, bei der z.B. aufgrund von Toleranzen beispielsweise nur wenigstens 95 % oder wenigstens 99 % des Volumens des Zwischenraums im Wellenführungsabschnitt ausgefüllt sein können. Entsprechende Toleranzen können beispielsweise dadurch resultieren, dass nicht vollständig vermieden werden kann, dass sich Gasblasen in der Fluidschicht befinden. Bei Festkörpern kann insbesondere zusätzlich zum Festkörper ein Verbindungsfluid, beispielsweise ein Gel, vorgesehen sein, um den Festkörper trotz möglicher toleranzbedingter Unebenheiten vollflächig mit der Rückfläche des Wellenleiters bzw. der Reflexionsfläche zu koppeln. Insbesondere kann der Zwischenraum durch den Festkörper gemeinsam mit dem Verbindungsfluid vollständig ausgefüllt sein. Das Verbindungsfluid kann zwischen dem Festkörper und der Rückfläche und/oder zwischen dem Festkörper und der Reflexionsfläche angeordnet sein.

Der Wellenleiter kann aus Metall bestehen, beispielsweise aus Aluminium, Stahl oder Cuphin. Bei Cuphin handelt es sich um eine bleifreie Legierung, die insbesondere im Sanitärbereich genutzt wird, mit der Legierungsformel CuZn21Si3P. Der Wellenleiter kann insbesondere aus einem Blech des entsprechenden Materials bestehen, insbesondere aus Blech gestanzt sein. Alternativ kann der Wellenleiter aus Keramik oder Glas bestehen. Der Wellenleiter kann durch eine gerade oder eine entlang der Rückfläche gekrümmte, insbesondere quaderförmige, Platte gebildet sein. Er kann insbesondere zumindest im Wellenführungsabschnitt eine konstante Dicke senkrecht zur Rückfläche aufweisen.

Die Reflexionsfläche bzw. eine die Reflexionsfläche bildende Komponente kann aus den gleichen Materialien gebildet sein, wie sie auch für den Wellenleiter angegeben sind, jedoch beispielsweise auch aus Kunststoff. Insbesondere kann mit Zusatzstoffen gefüllter Kunststoff, also beispielsweise ein mit Glas, Keramik und/oder Kohlefaser gefüllter Kunststoff, verwendet werden. Zumindest im Bereich der Reflexionsfläche wird vorzugsweise eine hohe akustische Feldimpedanz erreicht, um eine im Wesentlichen vollständige Schallreflexion zu erreichen.

Die Reflexionsfläche kann durch das Gehäuse der Messeinrichtung gebildet sein, das beispielsweise in einem Durchflussmesser auch ein Messvolumen für ein Fluid begrenzen kann. Das Gehäuse kann mehrteilig sein bzw. die Reflexionsfläche kann als separat von dem Gehäuse ausgebildeter Reflektor bereitgestellt sein. Beispielsweise können Seitenwände des Messkanals aus einem Kunststoff gebildet sein und die Reflexionsfläche aus einem Blechteil oder einem Kunststoffformteil aus einem Kunststoff mit einer höheren akustischen Feldimpedanz als der Kunststoff der Seitenwände, beispielsweise aus einem gefüllten Kunststoff.

Der erste Ultraschallwandler und vorzugsweise auch der zweite Ultraschallwandler können mit dem Wellenleiter gekoppelt sein. Alternativ kann der zweite Ultraschallwandler auch mit einem zweiten Wellenleiter gekoppelt sein oder beispielsweise unmittelbar mit einem in einem Messvolumen eines Durchflusszählers geführten Fluid gekoppelt sein. Der erste bzw. zweite Ultraschallwandler kann insbesondere mit der Rückfläche des bzw. des jeweiligen Wellenleiters, insbesondere außerhalb des Wellenführungsabschnitts, gekoppelt sein. Alternativ kann er auch mit einer Stirnfläche des Wellenleiters gekoppelt sein, die gewinkelt, insbesondere senkrecht, auf der Rückfläche steht.

Die Steuereinrichtung kann insbesondere dazu eingerichtet sein, die Messrichtung umzukehren, also den zweiten Ultraschallwandler zum Senden und den ersten Ultrasachallwandler zum Empfangen zu nutzen. Dies kann beispielsweise zur Ermittlung eines Laufzeitunterschiedes für beide Messrichtungen genutzt werden, beispielsweise um einen Durchflusszähler zu implementieren. In diesem Fall kann die Messgröße von Empfangssignalen für beide Messrichtungen, z.B. von einem Phasenversatz oder Laufzeitunterschied zwischen den Empfangssignalen, abhängen.

Die Messeinrichtung kann zur Messung einer Eigenschaft eines Fluids oder einer Strömung des Fluids dienen, wobei der Wellenleiter derart in einem das Fluid aufnehmenden oder führenden Messvolumen angeordnet ist, dass eine der Rückfläche gegenüberliegende Vorderfläche des Wellenleiters das Fluid im Messvolumen im Messbereich kontaktiert, um Druckwellen in das Fluid einzukoppeln, und/oder wobei die Vorderfläche eine Seitenwand des Messvolumens bildet. Das Messvolumen kann beispielsweise ein Messrohr oder allgemein ein Messkanal sein, das bzw. der einen Fluidzufluss der Messeinrichtung mit einem Fluidablauf der Messeinrichtung verbindet. Wird in einer solchen Messeinrichtung ein Festkörper im Zwischenraum zwischen Wellenleiter und Reflexionsfläche genutzt, so sollte dieser vorzugsweise aus einem Material bestehen, das eine vernachlässigbare Fluidaufnahme aufweist, um eine Beeinflussung der Eigenschaften des Festkörpers bei Fluidkontakt zu vermeiden. Ergänzend oder alternativ kann der Festkörper bzw. der gesamte Zwischenraum zwischen Wellenleiter und Reflexionsfläche im Wellenführungsabschnitt jedoch auch fluiddicht von dem Messvolumen getrennt sein.

Der Zwischenraum zwischen dem Wellenleiter und der Reflexionsfläche kann fluidisch mit dem Messvolumen gekoppelt sein, so dass das in das Messvolumen eingeführte und/oder dort befindliche Fluid in den Zwischenraum eintreten kann, um die Fluidschicht auszubilden. Die Fluidschicht wird in diesem Fall durch das zu messende Fluid gebildet. Die Fluidschicht kann hierdurch einerseits besonders einfach implementiert werden und es kann insbesondere ein Druckausgleich zwischen der Vorder- und Rückfläche des Wellenleiters erreicht werden. Anderseits kann in diesem Fall auch eine Bestimmung eines Parameters der Fluidschicht, beispielsweise von deren Dichte oder Temperatur, als Eigenschaft des Fluids und somit als Messgröße bzw. weitere Messgröße bestimmt werden. Die Ermittlung von Parametern der Fluidschicht wird später noch genauer erläutert.

Zumindest ein Teil des Messvolumens kann durch einen Messkanal gebildet werden, der abgesehen von einem Kanaleinfluss und einem Kanalausfluss fluiddicht abgeschlossen ist, wobei eine Seitenwand des Messkanals zumindest abschnittsweise durch die Vorderfläche des Wellenleiters gebildet ist, wobei der Messkanal ausschließlich über den Kanaleinfluss und/oder den Kanalausfluss fluidisch mit dem Zwischenraum zwischen der Rückfläche des Wellenleiters und der Reflexionsfläche gekoppelt ist. Der Zwischenraum zwischen der Rückfläche und der Reflexionsfläche kann in diesem Fall insbesondere einen Bypasskanal bilden, der nur stromaufwärts und stromabwärts der Messstrecke mit dem Messkanal verbunden ist. Da es beispielsweise in Durchflusszählern ohnehin zweckmäßig sein kann, wenigstens einen Bypasskanal vorzusehen, wird somit eine Zusatzfunktion durch den Zwischenraum bereitgestellt.

Je nach konkreter Ausgestaltung der Fluidführung, kann das Fluid im Bypasskanal an der Rückfläche des Wellenleiters die gleiche Strömungsrichtung aufweisen wie im Messvolumen an der Vorderfläche des Wellenleiters. Wie später noch erläutert wird, ist es jedoch auch möglich, dass die Strömung in diesem Bypasskanal gewinkelt, insbesondere im Wesentlichen senkrecht, zur Strömung im Messkanal verläuft, wodurch unter Umständen der Einfluss der Bypassströmung auf die Messung weiter reduziert werden kann.

Um eine Veränderung der Dicke der Fluidschicht im Bypasskanal dadurch, dass dieser durch Ablagerungen verengt wird, zu vermeiden, kann es zweckmäßig sein, stromaufwärts des Kanaleinflusses bzw. am Kanaleinfluss selbst, eine Siebstruktur oder Ähnliches anzuordnen. Ergänzend oder alternativ kann durch eine geeignete Strömungsführung bzw. -konditionierung eine Anlagerung von Fremdstoffen im Bypasskanal vermieden werden. Insbesondere kann durch Vorversuche bzw. Simulationen die Strömungsführung so gestaltet werden, dass über die gesamte Länge des Zwischenraums oder zumindest im Einströmbereich in den Zwischenraum keine Fluidräume vorhanden sind, in denen keine oder nur eine geringe rezirkulierende Strömung an der Rückfläche des Wellenleiters auftritt. Bei hinreichender Strömungsgeschwindigkeit kann durch geeignete Gestaltung des Einströmbereichs erreicht werden, dass am Wellenleiter bzw. im Bypasskanal abgelagertes Material wieder ausgeschwemmt wird.

Der Messkanal kann einen Fluidauslass der Messeinrichtung torusartig umlaufen, wobei das Fluid dem Kanaleinfluss über eine Rampe von einem, insbesondere im Einbauzustand der Messeinrichtung unterhalb des Messkanals liegenden, Fluidzufluss der Messeinrichtung zuführbar ist, wobei der Kanalausfluss in den Fluidauslass mündet, wobei der Zwischenraum zwischen dem Wellenleiter und der Reflexionsfläche einen Bypasskanal bildet, der den Messkanal zumindest abschnittsweise torusartig umgibt und den Fluidzufluss mit einem, insbesondere im Einbauzustand der Messeinrichtung oberhalb des Messkanals angeordneten, Verbindungsvolumen verbindet, das in den Fluidauslass mündet. Eine solche Konfiguration kann beispielsweise in einem Messkapselzähler umgesetzt werden.

Bei der erläuterten Ausgestaltung können die Strömung innerhalb des Messkanals bzw. die Ausbreitungsrichtung der geführten Welle im Wellenleiter im Wesentlichen horizontalen verlaufen. Auch eine Druckwelle im Fluid bzw. eine Fluidschicht im Zwischenraum kann sich im Wesentlichen horizontal ausbreiten. Das Fluid im Bypasskanal bzw. im Zwischenraum strömt hingegen im Wesentlichen vertikal. Somit führt eine Strömung im Bypasskanal bei Empfangssignalen, die aufgrund von im Bypasskanal angeregten Druckwellen empfangen werden, im Wesentlichen zu keinem Mitnahmeeffekt aufgrund der Strömung, womit es prinzipiell ausreichend sein kann, nur ein Empfangssignal für eine Ausbreitungsrichtung auszuwerten, wenn beispielsweise eine Dichte oder Temperatur des Fluids auf Basis einer Laufzeitmessung für eine solche Druckwelle bestimmt werden soll.

Das Verbindungsvolumen kann über einen Drosselkanal oder mehrere Drosselkanäle mit dem Fluidauslass verbunden sein, wobei der Strömungsquerschnitt des Drosselkanals oder die Summe der Strömungsquerschnitte der Drosselkanäle kleiner ist als der Strömungsquerschnitt des durch den Zwischenraum gebildeten Bypasskanals oder als die Summe der Strömungsquerschnitte dieses Bypasskanals und wenigstens eines weiteren Bypasskanals, der den Fluidzufluss mit dem Verbindungsvolumen verbindet. Durch geeignete Dimensionierung des Drosselkanals bzw. der Drosselkanäle kann vorgegeben werden, welcher Teil des vom Fluidzufluss zum Fluidauslass geführten Fluids an dem Messkanal vorbeigeführt wird. Dies kann dazu dienen, das Empfindlichkeits- bzw. Auflösungsmaximum der Messeinrichtung in den Bereich des typisch zu erwartenden Durchflusses zu verschieben.

In der erfindungsgemäßen Messeinrichtung ist es alternativ auch möglich, dass der Wellenführungsabschnitt des Wellenleiters oder ein Teilabschnitt des Wellenführungsabschnitts frei im Messvolumen liegt und somit von dem Fluid umströmbar ist. Dies kann einen einfachen Aufbau der Messeinrichtung ermöglichen.

Der Zwischenraum zwischen dem Wellenleiter und der Reflexionsfläche kann zumindest im Wellenführungsabschnitt des Wellenleiters durch den Festkörper ausgefüllt sein und/oder der Zwischenraum kann fluiddicht gegenüber der Umgebung der Messeinrichtung, und insbesondere gegenüber dem Messvolumen, abgeschlossen sein, so dass die Dicke D des Festkörpers oder der Fluidschicht von dem Druck an der oder einer von der Rückfläche abgewandten Vorderfläche des Wellenleiters abhängt, wobei der Druck als die Messgröße ermittelt wird. Der Festkörper bzw. die Fluidschicht kann hierbei aus einem kompressiblen Material, beispielsweise aus einem Elastomer, gebildet sein, um ein kontrolliertes Nachgeben des Wellenleiters bei steigendem Druck in Richtung der Reflexionsfläche zu ermöglichen. Alternativ ist es beispielsweise möglich, eine Fluidschicht aus einem kaum kompressiblen Fluid zu nutzen, wobei der Zwischenraum mit einem mit einem anderen Fluid, beispielsweise mit einem Gas, gefüllten Ausgleichsvolumen verbunden ist. Bei zunehmendem Druck an der Vorderfläche des Wellenleiters kann das die Fluidschicht bildende Fluid somit aus dem Zwischenraum teilweise in das oder die Ausgleichsvolumen verdrängt werden, wobei das dort befindliche weitere Fluid bzw. ein dort befindlicher Festkörper komprimiert wird.

Bei vielen kompressiblen Materialien ist die Gegenkraft bei nicht allzu starker Kompression näherungsweise proportional zur Wegstrecke. Wird die Dicke D zudem nicht allzu stark gegenüber jener Dicke, die in obiger Formel bei $\Delta = 0$ resultiert, variiert, so ist die Änderung der Phasengeschwindigkeit gemäß der im Rahmen der Erfindung durchgeführten Simulationen zumindest näherungsweise proportional zur Änderung der Dicke D. Somit kann ein linearer Zusammenhang zwischen der Phasengeschwindigkeit und dem Druck im Messvolumen angenommen werden. Alternativ ist es jedoch zur Erhöhung der Genauigkeit beispielsweise auch möglich, eine Lookup-Tabelle, eine durch Regression bestimmte Funktion oder Ähnliches zur Vorgabe eines solchen Zusammenhangs zu nutzen.

Die Steuereinrichtung kann dazu eingerichtet sein, zeitlich nacheinander ein erstes und zweites Empfangssignal des zweiten Ultraschallwandlers derart zu erfassen, dass das erste Empfangssignal von Schwingungen des zweiten Ultraschallwandlers abhängt, die unmittelbar oder mittelbar durch eine durch die geführte Welle in der Fluidschicht oder in dem Festkörper angeregte Druckwelle angeregt werden oder die unmittelbar durch die geführte Welle in dem Wellenleiter angeregt werden, und dass das zweite Empfangssignal von Schwingungen des zweiten Ultraschallwandlers abhängt, die unmittelbar oder mittelbar durch eine durch die geführte Welle in dem Fluid im Messvolumen angeregte Druckwelle angeregt werden, und einerseits die Messgröße in Abhängigkeit des ersten und zweiten Empfangssignals zu ermitteln und andererseits die Messgröße, insbesondere einen Druck im Messvolumen und/oder eine Temperatur und/oder eine Dichte der Fluidschicht oder des Festkörpers, in Abhängigkeit des ersten Empfangssignals und eine weitere Messgröße, insbesondere eine Strömungsgeschwindigkeit oder einen Volumenfluss des Fluids, in Abhängigkeit des zweiten Empfangssignals zu ermitteln.

Die Abstände zwischen der Rückfläche des Wellenleiters und der Reflexionsfläche einerseits und zwischen der Vorderfläche des Wellenleiters und einem messvolumenseitigen Reflektor bzw. der gegenüberliegenden Wand des Messvolumens andererseits sind typischerweise deutlich unterschiedlich voneinander, so dass je nach Ausbreitungspfad, also der Führung einer Druckwelle über den Zwischenraum oder über das Messvolumen, deutlich unterschiedliche Laufzeiten des Signals vom ersten zum zweiten Ultraschallwandler für diese Ausbreitungspfade resultieren. Auch eine Führung der geführten Welle unmittelbar innerhalb des Wellenleiters vom ersten zum zweiten Ultraschallwandler weist typischerweise eine von den beiden anderen genannten Laufzeiten deutlich unterschiedliche Laufzeit auf. Dies ermöglicht es, in verschiedenen Zeitabständen von der Anregung der geführten Welle Messdaten für das erste und zweite Empfangssignal zu erfassen bzw. bei einer durchgehenden Messdatenerfassung die den verschiedenen Empfangssignalen zugeordneten Messdaten zu separieren.

Die Berücksichtigung des ersten und zweiten Empfangssignals kann beispielsweise dazu dienen, für jedes dieser Empfangssignale eine Phasenlage bezüglich des Sendesignals zu ermitteln. Bei phasenbasierten Laufzeitbestimmungen ist bekannt, dass hierbei Mehrdeutigkeiten resultieren können. Da jedoch typischerweise im Zwischenraum die Strömungsgeschwindigkeit geringer ist als im Messvolumen und somit auch eine geringere Phasenverschiebung resultiert, können bei Berücksichtigung beider Empfangssignale bei bekannter Strömungsgeometrie solche Uneindeutigkeiten aufgehoben werden.

Bei der Ermittlung zweier Messgrößen, also der Messgröße und der weiteren Messgröße, kann beispielsweise ausgenutzt werden, dass je nach konkret genutzter Messgeometrie die Strömungsgeschwindigkeit der Fluidschicht im Zwischenraum oder zumindest die parallel zur Ausbreitungsrichtung der geführten Welle gerichtete Geschwindigkeitskomponente dieser Strömungsgeschwindigkeit erheblich kleiner sein kann als die Strömungsgeschwindigkeit des Fluids in dem Messvolumen, beispielsweise weil ein relativ schmaler Zwischenraum genutzt wird und/oder weil die Strömung im Zwischenraum im Wesentlichen senkrecht zur Ausbreitungsrichtung der geführten Welle verläuft. In diesem Fall kann das erste Empfangssignal im Wesentlichen einem Empfangssignal bei einer Messung an stehendem Fluid entsprechen, so dass bereits bei einer Messung in nur eine Ausbreitungsrichtung beispielsweise bereits eine Ermittlung von Druck, Temperatur oder Dichte erfolgen kann. Bedarfsweise kann ein verbleibender Einfluss der Fluidströmung beispielsweise durch Messung in beide Ausbreitungsrichtungen und Durchschnitts- bzw. Summenbildung der Laufzeiten kompensiert werden.

Der Zwischenraum zwischen dem Wellenleiter und der Reflexionsfläche kann, insbesondere durch ein Gehäuse der Messeinrichtung, fluiddicht gegenüber der Umgebung der Messeinrichtung und/oder dem Messvolumen abgeschlossen sein. Ein Abschluss gegenüber dem Messvolumen kann insbesondere dazu dienen, einen genutzten Festkörper trocken zu halten oder auch die Fluidschicht von dem Messvolumen zu separieren. Dies kann auch dann zweckmäßig sein, wenn die Fluidschicht aus dem gleichen Fluid besteht, wie es auch im Messvolumen vorhanden ist. Beispielsweise kann hierdurch sichergestellt werden, dass die Fluidschicht steht, wodurch beispielsweise die Robustheit einer Temperaturmessung durch Bestimmung der Schallgeschwindigkeit im Fluid erhöht werden kann.

Besonders vorteilhaft ist die Trennung des Zwischenraums von dem Messvolumen jedoch dann, wenn sich das Fluid der Fluidschicht von dem Fluid im Messvolumen unterscheidet. Die Fluidschicht kann beispielsweise durch Wasser, Öl oder ein Gel gebildet sein. Die Nutzung eines unterschiedlichen Fluids in der Fluidschicht ist insbesondere zweckmäßig, wenn die Fluidschicht bestimmte Eigenschaften, beispielsweise eine bestimmte Kompressibilität, aufweisen soll, oder wenn beispielsweise die Zusammensetzung des im Messvolumen geführten Fluids nicht bekannt ist bzw. über die Zeit variiert kann und ein Einfluss auf die Fluidschicht vermieden werden soll.

Ein fluiddichter Abschluss des Zwischenraums von der Umgebung der Messeinrichtung kann z.B. zweckmäßig sein, wenn das Messvolumen fluidisch mit dem Zwischenraum gekoppelt ist, um einen Fluidverlust zu vermeiden oder wenn durch die Fluidschicht bzw. den Festkörper eine definierte Gegenkraft für Druckmessungen bereitgestellt werden soll. Es kann aber auch vorteilhaft sein, wenn der Zwischenraum fluidisch mit der Umgebung gekoppelt ist. Beispielsweise kann die Fluidschicht in diesem Fall durch Kondenswasser, eine Kühlflüssigkeit oder eine andere Umgebungsfeuchtigkeit bereitgestellt werden.

Die Messeinrichtung kann derart ausgelegt sein, dass zumindest während der Ermittlung der Messgröße die oder eine weitere Fluidschicht oder der oder ein weiterer Festkörper einen weiteren Zwischenraum zwischen einem weiteren Wellenführungsabschnitt der Rückfläche des Wellenleiters und einer weiteren Reflexionsfläche ausfüllt, wobei der Wellenleiter in einem zwischen dem und dem weiteren Wellenführungsabschnitt des Wellenleiters liegenden Zwischenabschnitt des Wellenleiters durch eine Komponente der Messeinrichtung, insbesondere durch die die Reflexionsfläche ausbildende Komponente, abgestützt wird, die eine höhere akustische Feldimpedanz aufweist als die und/oder die weitere Fluidschicht oder der und/oder der weitere Festkörper.

Die Nutzung von zwei durch den Zwischenabschnitt separierten Zwischenräumen ermöglicht es, die geführte Lamb-Welle in dem und dem weiteren Wellenführungsabschnitt im Wesentlichen ungestört zu führen, während die den Zwischenabschnitt stützende Komponente einerseits eine in der jeweiligen Fluidschicht bzw. im jeweiligen Festkörper geführte Druckwelle zumindest weitgehend reflektiert und auch die geführte Welle im Bereich des Zwischenabschnitts zumindest weitgehend reflektiert. Somit werden Beiträge zum Empfangssignal, die nicht aus einem Ausbreitungspfad resultieren, bei dem eine Druckwelle über die Vorderfläche des Wellenleiters in ein kontaktiertes Fluid oder ein anderes untersuchtes System abgestrahlt wird, weitgehend unterdrückt, was in einigen Fällen die Signalauswertung erleichtern kann.

Der Festkörper oder die Fluidschicht und/oder das Fluid können eine niedrigere akustische Feldimpedanz aufweisen als der Wellenleiter und/oder eine die Reflexionsfläche ausbildende Komponente der Messeinrichtung. Dies führt bei der obig erläuterten Wahl der Dicke D zu besonders hohen Amplituden des Empfangssignals und somit zu einer besonders robusten Messung.

Ergänzend oder alternativ kann der Festkörper oder die Fluidschicht eine akustische Feldimpedanz von wenigstens $10^5$ Ns/m$^3$ oder wenigstens $10^6$ Ns/m$^3$ aufweisen. Insbesondere kann die Fluidschicht durch Flüssigkeit gebildet werden. Die erläuterte Wahl der Dicke ist insbesondere dann zweckmäßig, wenn ein nicht vernachlässigbarer Teil der Schwingungsenergie der Lamb-Welle in die Fluidschicht bzw. den Festkörper eingekoppelt wird, weshalb der Unterschied zwischen der akustischen Feldimpedanz des Wellenleiters und des Festkörpers bzw. der Fluidschicht nicht allzu groß sein sollte.

Die Auslegungsvariable **n** kann wenigstens zwei und/oder maximal fünf, insbesondere gleich zwei oder gleich 3 sein. Alternativ oder ergänzend kann die Dicke **D** der Fluidschicht oder des Festkörpers minimal 0,4 mm oder minimal 1,0 mm und/oder maximal 5 mm oder maximal 3,5 mm sein. Die Begrenzung der Auslegungsvariable **n** bzw. Dicke **D** nach unten kann zweckmäßig sein, um die Gefahr des Zusetzens des Zwischenraums durch Fremdkörper zu reduzieren, den Strömungswiderstand der Messeinrichtung zu reduzieren und/oder eine Robustheit gegenüber Störeinflüssen, beispielsweise gegenüber im Fluid mitgeführten Luftblasen, zu reduzieren. Die genannten Obergrenzen sind zweckmäßig, um eine hohe Bauraumeffizienz zu erreichen, um allzu große Bypasskanäle zu vermeiden und/oder um über die gesamte Strömung im Zwischenraum ein durch die Wandinteraktion dominiertes Strömungsverhalten zu erreichen.

Im Rahmen der Entwicklung der Erfindung wurden optimale Dicken **D** für verschieden beispielhafte Messeinrichtungen ermittelt, wobei durchgehend von einer Schwingungsfrequenz **f** von 1 MHz und einer Schallgeschwindigkeit in der Fluidschicht von 1500 m/s ausgegangen wurde. Wird ein Wellenleiter aus Aluminium mit einer Dicke von 1,5 mm genutzt, ist die Phasengeschwindigkeit der AO-Mode einer Lamb-Welle etwa 2500 m/s. Für **n** gleich 1 bzw. 2 bzw. 3, ergeben sich somit die optimalen Dicken von 0,47 mm, 1,41 mm und 2,34 mm. Für einen 1 mm dicken Wellenleiter aus Cuphin resultieren eine Phasengeschwindigkeit von etwa 1800 m/s und somit optimale Dicken von 0,68 mm, 2,04 mm und 3,39 mm für die genannten Werte von **n**. Für einen 1,5 mm dicken Wellenleiter aus Stahl resultieren für eine beispielhaft betrachtete Legierung eine Phasengeschwindigkeit von 2500 m/s und somit optimale Dicken von 0,47 mm, 1,41 mm und 2,34 mm für die genannten Werte von n. Die durch die angegebene Formel ermittelten optimalen Dicken stimmen gut mit experimentellen Ergebnissen überein.

Die Steuereinrichtung kann dazu eingerichtet sein, die Messgröße bzw. die weitere Messgröße in Abhängigkeit einer Amplitude und/oder einer Phasenlage und/oder der Position eines Nulldurchgangs und/oder des Frequenzspektrums des bzw. des jeweiligen Empfangssignals des zweiten Ultraschallwandlers oder einer in Abhängigkeit des bzw. des jeweiligen Empfangssignals ermittelten Laufzeit einer Anregung von dem ersten zu dem zweiten Ultraschallwandler zu ermitteln. Die Laufzeit bzw. Phasenlage kann für einen oder mehrere Pfade ermittelt werden. Als Pfade kommen hierbei insbesondere eine Führung über das Fluid im Messvolumen, eine Führung über die Fluidschicht bzw. einen Festkörper im Zwischenraum und eine direkte Führung über den Wellenleiter in Frage.

Als Messgröße bzw. weitere Messgröße können z.B. eine Strömungsgeschwindigkeit in dem Messvolumen und/oder ein Volumenfluss durch das Messvolumen und/oder ein Druck an der oder einer von der Rückfläche abgewandten Vorderfläche des Wellenleiters und/oder eine Temperatur und/oder eine Dichte und/oder eine Zusammensetzung der Fluidschicht oder des Festkörpers und/oder das Vorhandensein von Ablagerungen im Zwischenraum ermittelt werden.

Neben der erfindungsgemäßen Messeinrichtung betrifft die Erfindung ein Verfahren zur Ermittlung einer Messgröße, wobei eine Messeinrichtung verwendet wird, die einen ersten und zweiten Ultraschallwandler und einen Wellenleiter umfasst, wobei insbesondere eine erfindungsgemäße Messeinrichtung verwendet wird, wobei der erste Ultraschallwandler durch eine Steuereinrichtung der Messeinrichtung derart angesteuert wird, dass er eine geführte Welle mit einer vorgegebenen Schwingungsfrequenz **f** in dem Wellenleiter derart anregt, dass die geführte Welle sich in dem Wellenleiter parallel zu einer Rückfläche des Wellenleiters ausbreitet, wobei die Steuereinrichtung die Messgröße in Abhängigkeit eines Empfangssignals des zweiten Ultraschallwandlers ermittelt, wobei das Empfangssignal von unmittelbar und/oder mittelbar durch die geführte Welle verursachten Schwingungen des zweiten Ultraschallwandlers abhängt, wobei die Rückfläche des Wellenleiters zumindest in einem Wellenführungsabschnitt des Wellenleiters einer Reflexionsfläche der Messeinrichtung zugewandt und von dieser durch einen Zwischenraum beabstandet ist, wobei zumindest während der Ermittlung der Messgröße eine Fluidschicht oder ein Festkörper den Zwischenraum zwischen dem Wellenleiter und der Reflexionsfläche zumindest im Wellenführungsabschnitt des Wellenleiters ausfüllt, wobei der Abstand zwischen der Rückfläche und der Reflexionsfläche und somit die Dicke **D** der Fluidschicht oder des Festkörpers zumindest in dem Wellenführungsabschnitt den Zusammenhang

$$D = \frac{2(n \pm \Delta) - 1}{4f\sqrt{\dfrac{1}{c_f^2} - \dfrac{1}{c_{ph}^2}}}$$

mit der Schwingungsfrequenz **f,** der Schallgeschwindigkeit $c_f$ in der Fluidschicht oder dem Festkörper und der Phasengeschwindigkeit $c_{ph}$ im Wellenleiter aufweist, wobei die Auslegungsvariable **n** eine ganze positive Zahl und die Abweichung $\Delta$ einerseits gleich Null oder andererseits positiv und kleiner als 0,7 oder als 0,5 ist.

Das erfindungsgemäße Verfahren kann mit Merkmalen, die zur erfindungsgemäßen Messeinrichtung erläutert wurden, mit den dort genannten Vorteilen weitergebildet werden und umgekehrt. Die erfindungsgemäße Messeinrichtung kann insbesondere dazu eingerichtet sein, das erfindungsgemäße Verfahren durchzuführen.

Weitere Vorteile und Einzelheiten der Erfindung ergeben sich aus den folgenden Ausführungsbeispielen sowie den zugehörigen Zeichnungen. Hierbei zeigen schematisch:

Fig. 1    ein Ausführungsbeispiel einer erfindungsgemäßen Messeinrichtung zur Ermittlung einer Messgröße, bei deren Betrieb ein Ausführungsbeispiel des erfindungsgemäßen Verfahrens zur Ermittlung einer Messgröße durchgeführt wird,

Fig. 2    Empfangssignale eines Ultraschallwandlers für unterschiedliche Abstände zwischen dem Wellenleiter und der Reflexionsfläche in dem Ausführungsbeispiel gemäß Fig. 1,

Fig. 3 - 6    geschnittene Detailansichten weiterer Ausführungsbeispiele der erfindungsgemäßen Messeinrichtung,

Fig. 7    ein Diagramm zur Abhängigkeit der Phasengeschwindigkeit im Wellenleiter von der Dicke einer benachbarten Fluidschicht,

Fig. 8 und 9    Diagramme zum Zusammenhang zwischen der Schallgeschwindigkeit in einer zum Wellenleiter benachbarten Fluidschicht mit verschiedenen aus dem Empfangssignal ermittelbaren Werten, und

Fig. 10    ein weiteres Ausführungsbeispiel einer erfindungsgemäßen Messeinrichtung.

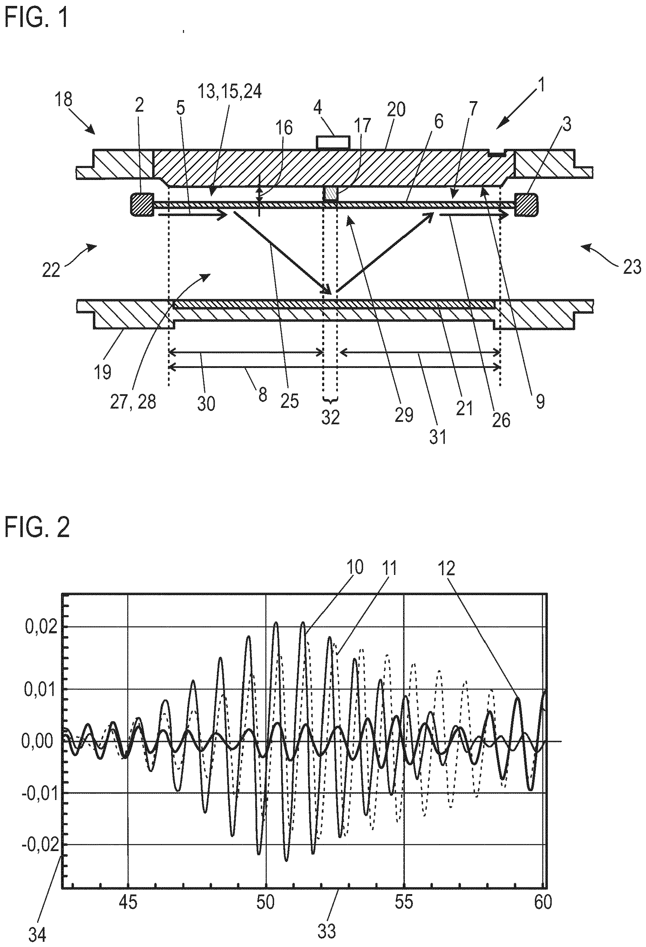

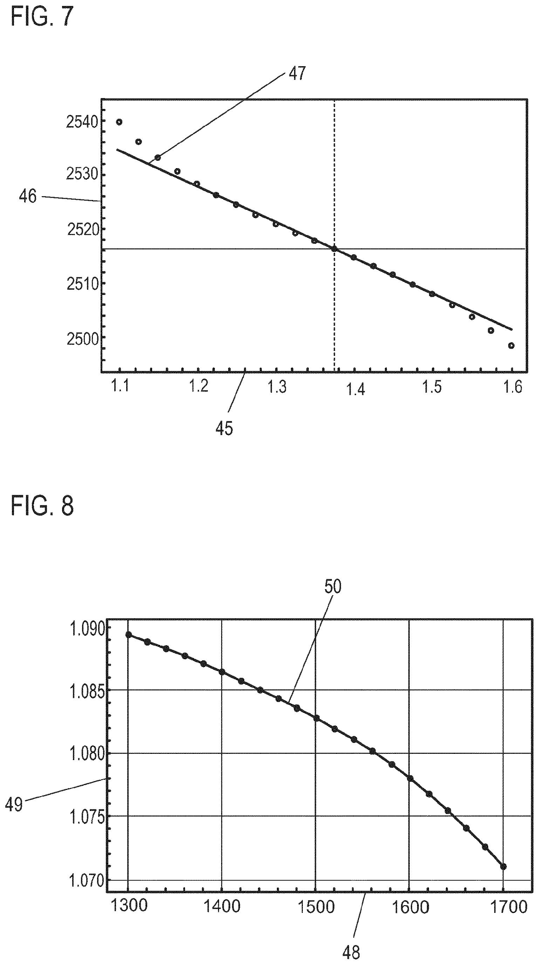

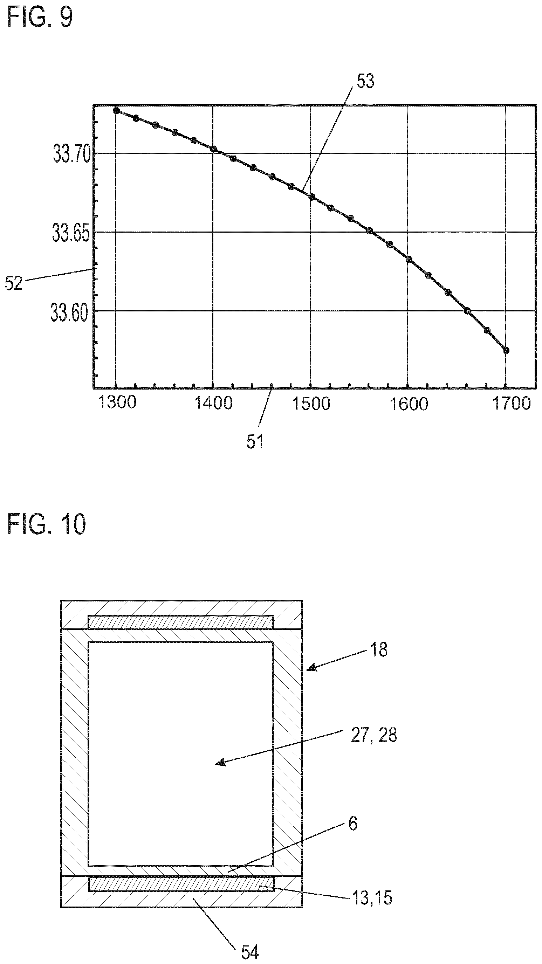

Fig. 1 zeigt eine Messeinrichtung 1 zur Ermittlung einer Messgröße, die im Beispiel ein Durchflusszähler ist, durch den eine Eigenschaft eines in einem Messvolumen 28 geführten Fluids 27 bzw. von dessen Strömung ermittelt werden soll. Beispielhaft wird zunächst davon ausgegangen, dass eine Strömungsgeschwindigkeit bzw. ein Durchflussvolumen ermittelt werden soll, wie es bei Durchflusszählern üblich ist. Wie später noch mit Bezug auf Fig. 8 und 9 erläutert werden wird, können ergänzend oder alternativ auch weitere Eigenschaften des Fluids 27, beispielsweise dessen Temperatur, Dichte oder Zusammensetzung ermittelt werden.

Die Messeinrichtung 1 umfasst einen ersten und zweiten Ultraschallwandler 2, 3, die im Beispiel beide mit einem Wellenleiter 6 gekoppelt sind. Durch eine Steuereinrichtung 4 wird der erste Ultraschallwandler derart angesteuert, dass eine geführte Welle 5 mit einer vorgegebenen Schwingungsfrequenz $f$ in dem Wellenleiter 6, insbesondere modenselektiv, derart angeregt wird, dass sie sich zunächst parallel zu einer Rückfläche 7 des Wellenleiters ausbreitet. Hierbei soll zunächst angenommen werden, dass die Komponente 17 nicht vorhanden ist, womit sich im Beispiel die Rückfläche 7 des Wellenleiters 6 über den gesamten Wellenführungsabschnitt 8 des Wellenleiters parallel zu der Reflexionsfläche 9 der Messeinrichtung 1 erstreckt. Wie bereits im allgemeinen Teil diskutiert wurde, ist es auch möglich, dass der Abstand zwischen der Rückfläche 7 und der Reflexionsfläche 9 in gewissen Grenzen, insbesondere innerhalb der angegebenen Grenzen für den Wert $\Delta$, variiert, wodurch diese Flächen insbesondere nur näherungsweise parallel zueinander verlaufen können, z.B. aufgrund von Bauteil- und/oder Fertigungstoleranzen. Befindet sich ein Fluid 27 in dem Messvolumen 28 bzw. wird die Messeinrichtung 1 durchströmt, indem Fluid über den Fluidzufluss 22 zugeführt und über den Fluidauslass 23 abgeführt wird, so tritt dies auch in den Zwischenraum 15 zwischen dem Wellenleiter 6 und der Reflexionsfläche 9 ein, wodurch eine Fluidschicht 13 des Fluids 27 diesen Zwischenraum 15 ausfüllt.

Zur Messung der Strömungsgeschwindigkeit bzw. des Durchflussvolumens wird, wie bei Durchflusszählern üblich, ein Laufzeitunterschied für entgegengesetzte Ausbreitungsrichtungen der angeregten Welle, das heißt einmal vom Ultraschallwandler 2 zum Ultraschallwandler 3 und einmal in umgekehrte Richtung, ermittelt, auf dessen Basis die Strömungsgeschwindigkeit ermittelt werden kann. Dies ist an sich wohl bekannt und soll nicht detailliert erläutert werden.

Um einen solchen Laufzeitunterschied zu ermitteln, muss ein Ausbreitungspfad für die Anregung betrachtet werden, der eine durch das Fluid 27 im Messvolumen 28 verlaufende Druckwellen 25 umfasst. Hierbei wird im Beispiel zunächst die geführte Welle 5 durch den Ultraschallwandler 2 angeregt, durch diese wird durch die Schwingung der Vorderfläche 29 des Wellenleiters 6 die Druckwelle 25 in das Fluid 27 im Messvolumen 28 abgestrahlt, die Druckwelle 25 wird an der Komponente 21 des Gehäuses 18 reflektiert, regt beim Auftreffen auf den Wellenleiter 6 erneut eine geführte Welle 26 an und diese wird durch den Ultraschallwandler 3 erfasst. Prinzipiell wäre es beispielsweise auch möglich, die Druckwelle 25 unmittelbar durch den Ultraschallwandler 3 zu erfassen bzw. getrennte Wellenleiter 6 für den sendenden und empfangenden Ultraschallwandler 2, 3 zu nutzen. Die umgekehrte Messrichtung ist nicht dargestellt, die vorangehende Erläuterung lässt sich jedoch auf diese entsprechend übertragen.

Im gezeigten Beispiel ist das Gehäuse 18 mehrteilig, wobei die Komponente 20, 21, die die Reflexionsfläche 9 bilden bzw. die Druckwelle 25 reflektieren, aus einem Material gebildet sind, das eine deutlich höhere akustische Feldimpedanz aufweist als das Fluid 27. Beispielsweise können diese Komponenten 20, 21 aus Metall oder gefülltem Kunststoff gebildet sein. Die Komponente 19 beeinflusst die Messung nicht oder nur unwesentlich und kann daher aus beliebigem Material, beispielsweise aus einem anderen Kunststoff, gefertigt sein. Der Wellenleiter 6 weist ebenfalls eine höhere akustische Feldimpedanz auf als das Fluid 27 und kann beispielsweise aus Blech gestanzt sein oder aus Keramik bestehen.

Wie bereits im allgemeinen Teil der Beschreibung der detailliert erläutert wurde, hat der Abstand 16 zwischen Wellenleiter 6 und Reflexionsfläche 9, der die Dicke $D$ der Fluidschicht 13 vorgibt, hierbei einen starken Einfluss auf die Amplitude der Empfangssignale am Schwingungswandler 3. Beispielhafte Empfangssignale 10, 11, 12 für drei unterschiedliche Abstände 16 und somit Dicken $D$ der Fluidschicht 13 sind in Fig. 2 dargestellt. Hierbei zeigt die X-Achse 33 die Zeit in Mikrosekunden und die Y-Achse 34 die Amplitude des jeweiligen Empfangssignals 10, 11, 12 in Volt. Hierbei wird durch die stirnseitige Anordnung des Ultraschallwandlers 2 an dem Wellenleiter 6 und die Wahl einer geeigneten Anregungsfrequenz und Polarisierung des als Ultraschallwandler 2 genutzten Piezoelements eine weitgehend modenreine Anregung einer AO-Mode einer Lamb-Welle als geführte Welle 5 erreicht. Der Wellenleiter 6 ist im Falle der Fig. 2 aus Stahl und weist eine Dicke in Hochrichtung in Fig. 1 von 1,5 mm auf.

Das Empfangssignal 10 resultiert für eine Dicke $D$ der Fluidschicht 13 von 1,4 mm, das Empfangssignal 11 für eine Dicke $D$ von 1,5 mm und das Empfangssignal 12 für eine Dicke $D$ von 0,9 mm. Wie bereits im allgemeinen Teil erläutert, ergibt sich bei einer Anregungsfrequenz $f$ von 1 MHz und einer Schallgeschwindigkeit $c_f$ im Fluid 27 von 1500 m/s bei Wahl des Auslegungsparameters $n$ als 1 bzw. 2 bzw. 3 eine optimale Dicke bzw. eine Dicke bei einer Abweichung $\Delta = 0$ von 0,47 mm bzw. 1,41 mm bzw. 2,34 mm.

Das Empfangssignal 10 resultiert somit bei einer näherungsweise optimalen Dicke $D$ bzw. bei einem Wert von ca. 0,02 für die Abweichung $\Delta$ und weist daher, wie erwartet, die maximale Amplitude auf.

Bei dem Empfangssignal 11 liegt eine stärkere Abweichung von der optimalen Dicke vor, nämlich ein $\Delta$-Wert von 0,19, womit die Amplitude, wie erwartet, jedoch nur geringfügig verringert ist.

Beim Empfangssignal 12 ist der Δ-Wert für den Wert 2 für den Auslegungsparameter **n** 1,09 bzw. für den Wert 1 für den Auslegungsparameter **n** 0,9. Somit liegt die Dicke **D** bzw. die Abweichung Δ deutlich außerhalb des im allgemeinen Teil diskutierten, vorteilhaften Bereichs. Die maximale Amplitude des Empfangssignals 12 ist somit gegenüber den Empfangssignalen 10, 11 deutlich verringert und eine Erkennung eines klaren Maximums und somit eine Laufzeitermittlung ist nicht robust möglich.

Der Zwischenraum 15 zwischen dem Wellenleiter 6 und der Reflexionsfläche 9 kann prinzipiell über die gesamte Länge des Wellenleiters 6 gegenüber dem Messvolumen 28 fluiddicht abgeschlossen sein, so dass ein Zu- bzw. Abfluss von Fluid nur im Bereich der Enden des Wellenleiters 6 bzw. der Ultraschallwandler 2, 3 möglich ist. In diesem Fall bildet der Zwischenraum 15 einen Bypasskanal 24, durch den ein Teil des Fluids an dem Messvolumen 28 vorbeigeführt werden kann.

In einigen Anwendungsfällen, beispielsweise wenn eine Messung an einem im Wesentlichen stehendem Fluid durch Einkopplung von Druckwellen in den Zwischenraum 15 erfolgen soll, bzw. wenn eine Durchströmung des Zwischenraums 15 durch Nutzung der Komponente 17 blockiert wäre, kann es jedoch vorteilhaft sein, wenn der Wellenführungsabschnitt 8 des Wellenleiters bzw. zumindest ein Teilabschnitt des Wellenführungsabschnitts 8 frei im Messvolumen liegt und somit vom Fluid 27 umströmbar ist. Dies kann beispielsweise dadurch erreicht werden, dass sich der Wellenleiter 6 nicht vollständig bis zu den vor bzw. hinter der Bildebene liegenden Seitenwänden des Messvolumens 28 erstreckt, wobei der Wellenleiter 3 beispielsweise nur im Bereich der Ultraschallwandler 2, 3 mit dem Gehäuse 18 verbunden sein kann.

Wird entgegen den vorangehenden Ausführungen die in Fig. 1 gezeigte Komponente 17 der Messeinrichtung 1 genutzt, die beispielsweise auch durch einen Vorsprung der Komponente 20 ausgebildet sein könnte, und weist die Komponente 17 bzw. der Vorsprung eine höhere akustische Feldimpedanz auf als die Fluidschicht 13, so werden einerseits im Zwischenraum 15 geführte Druckwellen an der Komponente 17 im Wesentlichen vollständig reflektiert und zum anderen wird die Führung der geführten Wellen 5 durch den Zwischenabschnitt 32 des Wellenleiters 6 derart beeinträchtigt, dass auch die geführte Welle 5 an den Grenzen des Zwischenabschnitts 32 zumindest weitgehend reflektiert wird. Es resultieren somit zwei separate Wellenführungsabschnitte 30, 31 im Wellenleiter 6, wobei eine direkte Führung der geführten Welle zwischen diesen separaten Wellenführungsabschnitten 30, 31 zumindest weitgehend unterdrückt ist. Durch Nutzung der Komponente 17 kann somit erreicht werden, dass Empfangssignale am Ultraschallwandler 3 im Wesentlichen ausschließlich aus einer Führung der Anregung als Druckwelle 25 über das Messvolumen 28 resultieren. Soll beispielsweise ausschließlich eine Laufzeit bzw. ein Phasenversatz für diesen Ausbreitungspfad bestimmt werden, kann durch Unterdrückung anderer Ausbreitungspfade durch die Komponente 17 die Auswertung des Empfangssignals erleichtert werden.

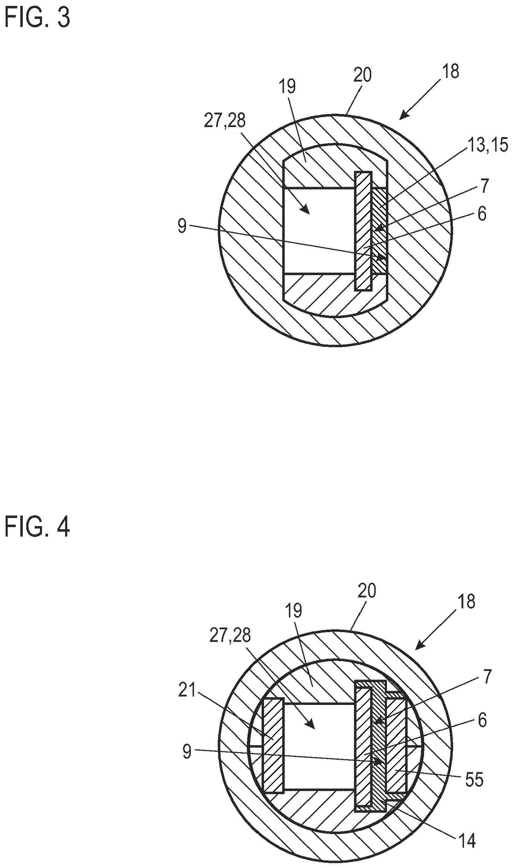

Fig. 3 zeigt eine geschnittene Ansicht senkrecht zur Strömungsrichtung einer etwas abgewandelten Ausgestaltung der Messeinrichtung 1. Das Gehäuse 18 der Messeinrichtung ist hierbei aus einer Gehäusekomponente 20 mit hoher akustischer Feldimpedanz, beispielsweise aus Metall, und weiteren Gehäusekomponenten 19, deren akustische Feldimpedanz eher gering ist und die beispielsweise aus Kunststoff gebildet sind, gebildet. Der Wellenleiter 6 ist durch die Gehäusekomponenten 19 gehaltert und schließt gemeinsam mit dieser und der Gehäusekomponente 20 den Zwischenraum 15 zwischen dem Wellenleiter 6 und der durch die Gehäusekomponente 20 gebildeten Reflexionsfläche 9 fluiddicht gegenüber dem das Fluid 27 führenden Messvolumen 28 ab. Dies kann beispielsweise zweckmäßig sein, wenn die Fluidschicht 15 aus einem anderen Fluid, beispielsweise einem Gel, bestehen soll, als das Fluid 27.

Der Zwischenraum 15 kann fluidisch mit wenigstens einem nicht dargestellten Ausgleichsvolumen in Verbindung stehen, so dass Unterschiede in der thermischen Ausdehnung des Zwischenraums 15 und der Fluidschicht 13 kompensiert werden können. Ist die Fluidschicht 14 bzw. ein Füllstoff der Ausgleichsvolumen kompressibel oder wird statt der Fluidschicht 13 ein kompressibler Festkörper genutzt, kann ergänzend oder alternativ zu einem Empfangssignal, das eine Wellenausbreitung über das Messvolumen 28 betrifft, ein Empfangssignal erfasst werden, das eine direkte Führung der geführten Welle vom Ultraschallwandler 2 zum Ultraschallwandler 3 innerhalb des Wellenleiters 6 betrifft. Die Laufzeit bzw. Phasenlage dieses Empfangssignals ist durch die Phasengeschwindigkeit für die geführte Welle bzw. die angeregte Schwingungsmode im Wellenleiter 6 vorgegeben, die wiederum mit der Dicke **D** der Fluidschicht 13 bzw. eines statt der Fluidschicht 13 genutzten Festkörpers zwischen Wellenleiter 6 und Reflexionsfläche 9 korreliert.

Dieser Zusammenhang ist in Fig. 7 dargestellt, wobei die X-Achse 45 die Dicke **D** der Fluidschicht 13 bzw. des stattdessen genutzten Festkörpers in mm angibt und die Y-Achse 46 die Phasengeschwindigkeit in m/s für die AO-Mode einer Lamb-Welle im Wellenleiter 6. Die im Diagramm eingezeichneten Punkte wurden durch Simulation errechnet. Wie an der Ausgleichsgerade 47 gut zu erkennen ist, kann zumindest für Dicken, bei denen der Wert der Abweichung Δ in der im allgemeinen Teil erläuterten Formel nahe 0 ist, mit guter Genauigkeit eine lineare Ausgleichsgerade 47 genutzt werden, um den Zusammenhang zwischen Phasengeschwindigkeit $c_{ph}$ und Dicke **D** anzugeben. Da im Gegensatz zu dem mit Bezug auf Fig. 2 diskutierten Diagramm von einer Dicke des Wellenleiters von 1 mm ausgegangen wird, resultiert für einen Wert der Auslegungsvariable **n** von 2 bei einer Abweichung Δ von 0 eine Dicke **D** von ungefähr 1,38 mm, die in Fig. 7 als gestrichelte vertikale Linie eingezeichnet ist.

Da typischerweise deutliche Laufzeitunterschiede für die Führung der Welle als Druckwelle über das Messvolumen 28 zwischen den Ultraschallwandler 2, 3 und für eine direkte Führung im Wellenleiter 6 zwischen den Ultraschallwandlern 2, 3 resultieren, kann eine solche Druckmessung zusätzlich zur Messung einer Durchflussgeschwindigkeit bzw. eines Durchflussvolumens erfolgen.

In einer Abwandlung der in Fig. 3 gezeigten Ausgestaltung könnte der Zwischenraum 15 auch nur zum Messvolumen 28 hin abgeschlossen sein und einen Fluidaustausch zur Umgebung der Messeinrichtung 1 ermöglichen. Dies kann es beispielsweise ermöglichen, dass die Fluidschicht 15 durch Kondensfeuchtigkeit oder ein sich im Umfeld der Messeinrichtung befindliches Kühlfluid oder Ähnliches gebildet wird.

Fig. 4 zeigt eine weitere Abwandlung der Messeinrichtung 1, bei der das Gehäuse als Gehäusekomponente 20 ein Rohr umfasst, das die die weiteren Komponenten halternden Gehäusekomponenten 19 aufnimmt. Zur Reflexion von Druckwellen im Messvolumen 28 wird eine Gehäusekomponente 21, beispielsweise ein Blech, mit hoher akustischer Feldimpedanz genutzt, die dem Wellenleiter 6 gegenüberliegt. Die Gehäusekomponenten 19 haltern einen Festkörper 14 aus einem Material mit eher niedriger akustischer Feldimpedanz, beispielsweise einem nicht gefüllten Kunststoff, der den Wellenleiter 6 und die Komponente 55, die die Reflexionsfläche 9 bildet, trägt.

Zwischen dem Festkörper 14 und der Reflexionsfläche 9 bzw. der Rückfläche 7 des Wellenleiters 6 kann beispielsweise ein Kontaktgeld oder Ähnliches angeordnet sein, um geringfügige toleranzbedingte Unebenheiten der genannten Komponenten auszugleichen. Aufgrund der relativ geringen akustischen Feldimpedanz des Festkörpers 14 wirkt dieser ähnlich wie die in den vorangehenden Ausführungsbeispielen genutzte Fluidschicht 15, so dass die gleiche Regel bzw. Formel zur Bestimmung der Dicke D des Festkörpers 14 im Bereich zwischen Wellenleiter 6 und Reflexionsfläche 9 genutzt werden kann, wie sie auch für die Fluidschicht 13 in den anderen Ausführungsbeispielen gilt.

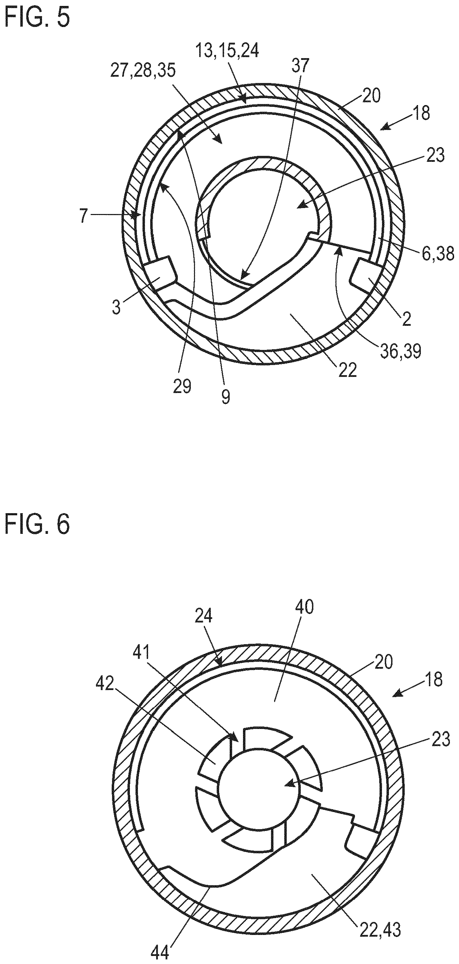

Eine weitere mögliche Ausgestaltung der Messeinrichtung 1 ist in Fig. 5 und 6 dargestellt, die Schnitte durch einen Messkapselzähler in unterschiedlichen separaten Schnittebenen zeigen. Hierbei wird das Messvolumen 28 durch einen Messkanal 35 gebildet, der abgesehen von einem Kanaleinfluss 36 und einem Kanalausfluss 37 fluiddicht abgeschlossen ist und den Fluidauslass 23 der Messeinrichtung 1 torusartig umläuft. Das Fluid 27 wird dem Kanaleinfluss 36 über eine Rampe 39 von einem im Einbauzustand der Messeinrichtung unterhalb des Messkanals 35 liegenden Fluidzufluss 22 zugeführt, der mit einer nicht dargestellten Anschlussleitung verbunden ist. Im Messkanal 35 kann beispielsweise eine Laufzeitmessung bzw. eine Messung des Laufzeitunterschieds für zwei Ausbreitungsrichtungen zur Durchflussbestimmung erfolgen. Dieser prinzipielle Aufbau von Durchflusszählern ist an sich bekannt und beispielsweise für Messkapselzähler durchaus üblich.

Während in üblichen Messkapselzählern Druckwellen im Fluid 27 im Messkanal 35 unmittelbar durch Ultraschallwandler angeregt werden, wird in Fig. 5 stattdessen, wie auch in den vorangehenden Ausführungsbeispielen, ein Ansatz genutzt, bei dem ein Ultraschallwandler 2 zunächst eine geführte Welle im Wellenleiter 6 anregt, die unmittelbar innerhalb des Wellenleiters und/oder mittelbar über die Abstrahlung einer Druckwelle in das Fluid 27 im Messvolumen 35 und/oder mittelbar über eine Abstrahlung einer Druckwelle in die Fluidschicht 13 im Zwischenraum 15 zum Ultraschallwandler 3 geführt wird, um dort entsprechende Empfangssignale zu empfangen. Wie bereits vorangehend erläutert wurde, können die beschriebenen Ausbreitungspfade deutlich unterschiedliche Laufzeiten aufweisen, so dass die Empfangssignale für diese unterschiedlichen Ausbreitungspfade zeitlich gut separiert werden können.

Der Wellenleiter 6 bildet eine Seitenwand 38 des Messkanals 35 und schließt somit den Messkanal 35 gegenüber dem Zwischenraum 15 zunächst fluiddicht ab. Ein Fluidaustausch zwischen dem Messkanal 35 und dem Zwischenraum 15 ist somit nur über den Kanaleinfluss 36 bzw. den Kanalausfluss 37 möglich. Der Wellenleiter 6 schließt somit bündig und fluiddicht mit dem unterhalb der Bildebene in Fig. 5 liegenden Boden des Messkanals 35, der den Messkanal von dem Fluidzufluss 22 trennt, und der in Fig. 5 oberhalb der Bildebene liegenden und in Fig. 6 gezeigten Deckplatte 44 ab. Der Zwischenraum 15 bildet somit einen Bypasskanal 24, der den Fluidzufluss 22 über ein oberhalb der Deckplatte 44 liegendes Verbindungsvolumen 40 mit dem Fluidauslass 23 verbindet. Ein Teil des über den Fluidzufluss 22 zugeführten Fluids kann somit über den Bypass 24 an dem Messkanal 35 vorbei zu dem Fluidauslass 23 geführt werden.

In dem in Fig. 5 und 6 gezeigten Beispiel wird zusätzlich ein weiterer Bypasskanal 43 genutzt, der dadurch gebildet wird, dass die Deckplatte 44 eine Ausnehmung aufweist, so dass das Fluid unmittelbar von dem Fluidzufluss 22 in das Verbindungsvolumen 40 strömen kann. Zugleich ist das Verbindungsvolumen 40 über Drosselkanäle 41, die durch Zwischenwände 42 begrenzt sind, mit dem Fluidauslass 23 verbunden, wobei die Summe der Strömungsquerschnitte der Drosselkanäle 41 kleiner ist als die Summe der Strömungsquerschnitte der Bypasskanäle 24 und 43.

Somit ist der über die Bypasskanäle 24, 43 geführte Anteil des der Messeinrichtung zugeführten Fluids 27 primär durch die Strömungsquerschnitte der Drosselkanäle 41 und deren Anzahl begrenzt. Das Verhältnis der Strömungsquerschnitte der Bypasskanäle 24 und 43 kann somit genutzt werden, um die Strömungsgeschwindigkeit im Bypasskanal 24 und somit im Zwischenraum 15 einzustellen. Dies kann beispielsweise dazu dienen, die Durchströmung des Zwischenraums 15 derart anzupassen, dass Ablagerungen vermieden werden und zugleich keine allzu hohen Strömungsgeschwindigkeiten auftreten, die zu Verwirbelungen in der Fluidschicht und somit zu Störungen des Messbetriebs führen könnten.

Erstreckt sich der Fluidzufluss 22 auch im Bereich unterhalb des Bypasskanals 24, ist die Strömungsrichtung im Bypasskanal 24 bzw. im Zwischenraum 15 im Wesentlichen vertikal, während die Fluidströmung im Messvolumen 35 und die Ausbreitungsrichtung der geführten Welle bzw. der Druckwellen, die durch diese ausgelöst werden, im Wesentlichen horizontal ist. Werden somit Laufzeiten für einen Ausbreitungspfad, der Druckwellen im Zwischenraum 15 umfasst, ermittelt, so können diese als näherungsweise unabhängig von der Strömungsgeschwindigkeit des Fluids im Messvolumen 35 bzw. vom Durchfluss durch die Messeinrichtung 1 betrachtet werden. Dies kann es insbesondere ermöglichen, bereits mit einer Messung in einer Ausbreitungsrichtung, also auf Basis einer einzigen Laufzeit bzw. einer einzigen Phasenverschiebung, beispielsweise am empfangenden Ultraschallwandler 3, eine Schallgeschwindigkeit in der Fluidschicht 13 abzuschätzen, auf deren Basis beispielsweise eine Temperatur oder eine Fluidzusammensetzung bestimmt werden kann.

Wie bereits im allgemeinen Teil diskutiert wurde bzw. sich aus der Auslegungsvorschrift für die Dicke D der Fluidschicht ergibt, wirkt sich eine Änderung der Schallgeschwindigkeit $c_f$ in der Fluidschicht 13 im Zwischenraum 15 zwischen dem Wellenleiter 6 und der Reflexionsfläche 9 auch auf die Führung der geführten Welle im Wellenleiter 6 selbst aus. Es kann daher vorteilhaft sein, Eigenschaften des die Fluidschicht 13 bildenden Fluids auf Basis eines Empfangssignals zu ermitteln, das Schwingungen des empfangenen Ultraschallwandlers 2, 3 betrifft, die unmittelbar durch die von dem jeweils anderen Ultraschallwandler 2, 3 im Wellenleiter 6 angeregte geführte Welle ausgelöst werden. Hierbei zeigt beispielsweise die Kurve 50 in Fig. 8 den Zusammenhang zwischen der auf der X-Achse 48 in m/s aufgetretenen Schallgeschwindigkeit $c_f$ in der Fluidschicht 13 und der auf der Y-Achse 49 aufgetragenen, bei einer Simulation der Messeinrichtung erzielten Maximalamplitude des Empfangssignals in V. Aufgrund des gezeigten monotonen Zusammenhangs kann aus der Amplitude des Empfangssignals unmittelbar auf die Schallgeschwindigkeit $c_f$ im Fluid und somit beispielsweise auf die Fluidzusammensetzung bzw. Temperatur rückgeschlossen werden. Ein ähnlicher Zusammenhang resultiert auch für die Dichte der Fluidschicht 13 und das Amplitudenmaximum des Empfangssignals.

Beim Aufbau von Durchflusszählern ist es häufig einfacher, eine hohe Zeitauflösung als eine hohe Spannungsauflösung zu erreichen. Da die Fluidschicht 13 die Phasengeschwindigkeit für die geführte Welle innerhalb des Wellenleiters 6 beeinflusst, kann auch aus der Phasenlage bzw. der Position eines bestimmten Nulldurchgangs auf die Schallgeschwindigkeit $c_f$ in der Fluidschicht 13, ihre Dichte bzw. die weiteren obig genannten Parameter geschlossen werden. Hierbei zeigt die Kurve 53 in Fig. 9 beispielhaft den im Rahmen einer Simulation ermittelten Zusammenhang zwischen der auf der X-Achse 51 aufgetragenen Schallgeschwindigkeit $c_f$ in der Fluidschicht 13 in m/s und dem auf der Y-Achse 52 in ms aufgetragenen Zeitpunkt eines bestimmten Nulldurchgangs des Empfangssignals. Aufgrund des monotonen Zusammenhangs kann aus dem Zeitpunkt des Nulldurchgangs unmittelbar auf die Schallgeschwindigkeit $c_f$ rückgeschlossen werden.

Fig. 10 zeigt eine weitere mögliche Ausgestaltung der Messeinrichtung 1, die sich von den vorangehend diskutierten Ausgestaltungen dadurch unterscheidet, dass das Gehäuse 18 einteilig ist, jedoch an den in Fig. 10 oberen und unteren Ende des durch das Gehäuse 18 begrenzten Messvolumens 28 relativ dünne Seitenwände aufweist, die einen jeweiligen Wellenleiter 6 bilden. An der Außenfläche dieser Wellenleiter 6 kann ein Zwischenraum 15 durch einen aufgesetzten Deckel 54 begrenzt werden, der die Fluidschicht 13 aufnimmt und die Reflexionsfläche bildet. Statt der Fluidschicht 13 könnte auch ein Festkörper verwendet werden.

Durch die Nutzung des Deckels 54 und der Fluidschicht 13 bzw. des Festkörpers im Zwischenraum 15 ist die von dem Messvolumen 28 abgewandte Rückfläche des jeweiligen Wellenleiters vor Umwelteinflüssen geschützt, die eine Messung stören könnten. Durch eine geeignete Wahl der Dicke der Fluidschicht 13 kann, wie obig erläutert, erreicht werden, dass geführte Wellen im jeweiligen Wellenleiter 6 im Wesentlichen ungestört bleiben.

Neben einem Schutz vor Umwelteinflüssen können der Deckel 54 und die Fluidschicht 13 zudem dazu dienen, den Wellenleiter 6 bei größeren Drücken im Messvolumen 28 abzustützen, so dass selbst bei großem Druck im Wesentlichen keine Verformung des Wellenleiters erfolgt. Alternativ kann, wie bereits vorangehend erläutert wurde, eine nachgiebige Fluidschicht 13 bzw. ein Festkörper genutzt werden, um beispielsweise auf Basis der Verformung des Wellenleiters 6 Druckinformationen zu gewinnen.

Bezugszeichenliste

| 1  | Messeinrichtung        |
|----|------------------------|
| 2  | Ultraschallwandler     |
| 3  | Ultraschallwandler     |
| 4  | Steuereinrichtung      |
| 5  | geführte Welle         |
| 6  | Wellenleiter           |
| 7  | Rückfläche             |
| 8  | Wellenführungsabschnitt|
| 9  | Reflexionsfläche       |
| 10 | Empfangssignal         |

| | |
|---|---|
| 11 | Empfangssignal |
| 12 | Empfangssignale |
| 13 | Fluidschicht |
| 14 | Festkörper |
| 15 | Zwischenraum |
| 16 | Abstand |
| 17 | Komponente |
| 18 | Gehäuse |
| 19 | Komponente |
| 20 | Komponente |
| 21 | Komponente |
| 22 | Fluidzufluss |
| 23 | Fluidauslass |
| 24 | Bypasskanal |
| 25 | Druckwelle |
| 26 | geführte Welle |
| 27 | Fluid |
| 28 | Messvolumen |
| 29 | Vorderfläche |
| 30 | Wellenführungsabschnitt |
| 31 | Wellenführungsabschnitt |
| 32 | Zwischenabschnitt |
| 33 | X-Achse |
| 34 | Y-Achse |
| 35 | Messkanal |
| 36 | Kanaleinfluss |
| 37 | Kanalausfluss |
| 38 | Seitenwand |
| 39 | Rampe |
| 40 | Verbindungsvolumen |
| 41 | Drosselkanal |
| 42 | Zwischenwand |
| 43 | Bypasskanal |
| 44 | Deckplatte |
| 45 | X-Achse |
| 46 | Y-Achse |
| 47 | Ausgleichsgerade |
| 48 | X-Achse |
| 49 | Y-Achse |
| 50 | Kurve |
| 51 | X-Achse |
| 52 | Y-Achse |
| 53 | Kurve |
| 54 | Deckel |
| 55 | Komponente |

## Patentansprüche

1. Messeinrichtung (1) zur Ermittlung einer Messgröße, mit einem ersten und zweiten Ultraschallwandler (2, 3), einer Steuereinrichtung (4), die dazu eingerichtet ist, den ersten Ultraschallwandler (2) derart anzusteuern, dass der erste Ultraschallwandler (2) eine geführte Welle (5) mit einer vorgegebenen Schwingungsfrequenz f in einem mit dem ersten Ultraschallwandler (2) schwingungsgekoppelten Wellenleiter (6) der Messeinrichtung (1) derart anregt, dass die geführte Welle (5) sich in dem Wellenleiter (6) parallel zu einer Rückfläche (7) des Wellenleiters (6) ausbreitet, wobei die Steuereinrichtung (4) dazu eingerichtet ist, die Messgröße in Abhängigkeit eines Empfangssignals (10, 11, 12) des zweiten Ultraschallwandlers (3) zu ermitteln, wobei das Empfangssignal (10, 11, 12) von unmittelbar und/oder mittelbar durch die geführte Welle (5) verursachten Schwingungen des zweiten Ultraschallwandlers (3) abhängt,

**dadurch gekennzeichnet, dass** die Rückfläche (7) des Wellenleiters (6) zumindest in einem Wellenführungsabschnitt (8, 30, 31) des Wellenleiters (6) einer Reflexionsfläche (9) der Messeinrichtung (1) zugewandt und von dieser durch einen Zwischenraum (15) beabstandet ist, wobei die Messeinrichtung (1) derart ausgelegt ist, dass zumindest während der Ermittlung der Messgröße eine Fluidschicht (13) oder ein Festkörper (14) den Zwischenraum (15) zwischen dem Wellenleiter (6) und der Reflexionsfläche (9) zumindest im Wellenführungsabschnitt (8, 30, 31) des Wellenleiters (6) ausfüllt, wobei der Abstand (16) zwischen der Rückfläche (7) und der Reflexionsfläche (9) und somit die Dicke D der Fluidschicht (13) oder des Festkörpers (14) zumindest in dem Wellenführungsabschnitt (8, 30, 31) den Zusammenhang

$$D = \frac{2(n \pm \Delta) - 1}{4f\sqrt{\dfrac{1}{c_f^2} - \dfrac{1}{c_{ph}^2}}}$$

mit der Schwingungsfrequenz **f**, der Schallgeschwindigkeit **c_f** in der Fluidschicht (13) oder dem Festkörper (14) und der Phasengeschwindigkeit **c_ph** im Wellenleiter (6) aufweist, wobei die Auslegungsvariable **n** eine ganze positive Zahl und die Abweichung $\Delta$ einerseits gleich Null oder andererseits positiv und kleiner als 0,7 oder als 0,5 ist.

2. Messeinrichtung nach Anspruch 1, **dadurch gekennzeichnet, dass** sie zur Messung einer Eigenschaft eines Fluids (27) oder einer Strömung des Fluids (27) dient, wobei der Wellenleiter (6) derart in einem das Fluid (27) aufnehmenden oder führenden Messvolumen (28) angeordnet ist, dass eine der Rückfläche (7) gegenüberliegende Vorderfläche (29) des Wellenleiters (6) das Fluid (27) im Messvolumen (28) im Messbetrieb kontaktiert, um Druckwellen (25) in das Fluid (27) einzukoppeln, und/oder wobei die Vorderfläche (29) eine Seitenwand (38) des Messvolumens (28) bildet.

3. Messeinrichtung nach Anspruch 2, **dadurch gekennzeichnet, dass** der Zwischenraum (15) zwischen dem Wellenleiter (6) und der Reflexionsfläche (9) fluidisch mit dem Messvolumen (28) gekoppelt ist, sodass das in das Messvolumen (28) eingeführte und/oder dort befindliche Fluid (27) in den Zwischenraum (15) eintreten kann, um die Fluidschicht (13) auszubilden.

4. Messeinrichtung nach Anspruch 3, **dadurch gekennzeichnet, dass** zumindest ein Teil des Messvolumens (28) durch einen Messkanal (35) gebildet wird, der abgesehen von einem Kanaleinfluss (36) und einem Kanalausfluss (37) fluiddicht abgeschlossen ist, wobei eine Seitenwand (38) des Messkanals (35) zumindest abschnittsweise durch die Vorderfläche (29) des Wellenleiters (6) gebildet ist, wobei der Messkanal (35) ausschließlich über den Kanaleinfluss (36) und/oder den Kanalausfluss (37) fluidisch mit dem Zwischenraum (15) zwischen der Rückfläche (7) des Wellenleiters (6) und der Reflexionsfläche (9) gekoppelt ist.

5. Messeinrichtung nach Anspruch 4, **dadurch gekennzeichnet, dass** der Messkanal (35) einen Fluidauslass (23) der Messeinrichtung (1) torusartig umläuft, wobei das Fluid (27) dem Kanaleinfluss (36) über eine Rampe (39) von einem, insbesondere im Einbauzustand der Messeinrichtung (1) unterhalb des Messkanals (35) liegenden, Fluidzufluss (22) der Messeinrichtung (1) zuführbar ist, wobei der Kanalausfluss (37) in den Fluidauslass (23) mündet, wobei der Zwischenraum (15) zwischen dem Wellenleiter (6) und der Reflexionsfläche (9) einen Bypasskanal (24) bildet, der den Messkanal (35) zumindest abschnittsweise torusartig umgibt und den Fluidzufluss (22) mit einem, insbesondere im Einbauzustand der Messeinrichtung (1) oberhalb des Messkanals (35) angeordneten, Verbindungsvolumen (40) verbindet, das in den Fluidauslass (23) mündet.

6. Messeinrichtung nach Anspruch 5, **dadurch gekennzeichnet, dass** das Verbindungsvolumen (40) über einen Drosselkanal (41) oder mehrere Drosselkanäle (41) mit dem Fluidauslass (23) verbunden ist, wobei der Strömungsquerschnitt des Drosselkanals (41) oder die Summe der Strömungsquerschnitte der Drosselkanäle (41) kleiner ist als der Strömungsquerschnitt des durch den Zwischenraum (15) gebildeten Bypasskanals (24) oder als die Summe der Strömungsquerschnitte dieses Bypasskanals (24) und wenigstens eines weiteren Bypasskanals (43), der den Fluidzufluss (22) mit dem Verbindungsvolumen (40) verbindet.

7. Messeinrichtung nach Anspruch 2 oder 3, **dadurch gekennzeichnet, dass** der Wellenführungsabschnitt (8, 30, 31) des Wellenleiters (6) oder ein Teilabschnitt des Wellenführungsabschnitts (8, 30, 31) frei im Messvolumen (28) liegt und somit von dem Fluid (27) umströmbar ist.

8. Messeinrichtung nach Anspruch 1 oder 2, **dadurch gekennzeichnet, dass** der Zwischenraum (15) zwischen dem Wellenleiter (6) und der Reflexionsfläche (9) zumindest im Wellenführungsabschnitt (8, 30, 31) des Wellenleiters (6) durch den Festkörper (14) ausgefüllt wird und/oder der Zwischenraum (15) fluiddicht gegenüber der Umgebung der Messeinrichtung (1), und insbesondere gegenüber dem Messvolumen (28), abgeschlossen ist, sodass die Dicke D des Festkörpers (14) oder der Fluidschicht (13) von dem Druck an der oder einer von der Rückfläche (7) abgewandten Vorderfläche (29) des Wellenleiters abhängt, wobei der Druck als die Messgröße ermittelt wird.

9. Messeinrichtung nach einem der Ansprüche 2 bis 8, **dadurch gekennzeichnet, dass** die Steuereinrichtung (4) dazu eingerichtet ist, zeitlich nacheinander ein erstes und zweites Empfangssignal (10, 11, 12) des zweiten Ultraschallwandlers (3) derart zu erfassen, dass das erste Empfangssignal (10, 11, 12) von Schwingungen des zweiten Ultraschallwandlers (3) abhängt, die unmittelbar oder mittelbar durch eine durch die geführte Welle (5) in der Fluidschicht (13) oder in dem Festkörper (14) angeregte Druckwelle angeregt werden oder die unmittelbar durch die geführte Welle (5) in dem Wellenleiter (6) angeregt werden, und dass das zweite Empfangssignal (10, 11, 12) von Schwingungen des zweiten Ultraschallwandlers (3) abhängt, die unmittelbar oder mittelbar durch eine durch die geführte Welle (5) in dem Fluid (27) im Messvolumen (28) angeregte Druckwelle (25) angeregt werden, und einerseits die Messgröße in Abhängigkeit des ersten und zweiten Empfangssignals (10, 11, 12) zu ermitteln oder andererseits die Messgröße, insbesondere einen Druck im Messvolumen (28) und/oder eine Temperatur und/oder Dichte der Fluidschicht (13) oder des Festkörpers (14), in Abhängigkeit des ersten Empfangssignals (10, 11, 12) und eine weitere Messgröße, insbesondere eine Strömungsgeschwindigkeit oder einen Volumenfluss des Fluids (27), in Abhängigkeit des zweiten Empfangssignals (10, 11, 12) zu ermitteln.

10. Messeinrichtung nach einem der vorangehenden Ansprüche, **dadurch gekennzeichnet, dass** der Zwischenraum (15) zwischen dem Wellenleiter (6) und der Reflexionsfläche (9), insbesondere durch ein Gehäuse (18) der Messeinrichtung (1), fluiddicht gegenüber der Umgebung der Messeinrichtung (1) und/der dem Messvolumen (28) abgeschlossen ist.

11. Messeinrichtung nach einem der vorangehenden Ansprüche, **dadurch gekennzeichnet, dass** die Messeinrichtung (1) derart ausgelegt ist, dass zumindest während der Ermittlung der Messgröße die oder eine weitere Fluidschicht (13) oder der oder ein weiterer Festkörper (14) einen weiteren Zwischenraum zwischen einem weiteren Wellenführungsabschnitt (31) der Rückfläche (7) des Wellenleiters (6) und einer weiteren Reflexionsfläche ausfüllt, wobei der Wellenleiter (6) in einem zwischen dem und dem weiteren Wellenführungsabschnitt (30, 31) des Wellenleiters (6) liegenden Zwischenabschnitt (32) des Wellenleiters (6) durch eine Komponente (17) der Messeinrichtung (1), insbesondere die die Reflexionsfläche (9) ausbildende Komponente (20), abgestützt wird, die eine höhere akustische Feldimpedanz aufweist als die und/oder die weitere Fluidschicht (13) oder der und/oder der weitere Festkörper (14).

12. Messeinrichtung nach einem der vorangehenden Ansprüche, **dadurch gekennzeichnet, dass** der Festkörper (14) oder die Fluidschicht (13) und/oder das Fluid (27) eine niedrigere akustische Feldimpedanz aufweisen als der Wellenleiter (6) und/oder eine die Reflexionsfläche (9) ausbildende Komponente (20) der Messeinrichtung (1) und/oder dass der Festkörper (14) oder die Fluidschicht (13) eine akustische Feldimpedanz von wenigstens $10^5$ Ns/m$^3$ oder wenigstens $10^6$ Ns/m$^3$ aufweisen.

13. Messeinrichtung nach einem der vorangehenden Ansprüche, **dadurch gekennzeichnet, dass** einerseits die Auslegungsvariable **n** wenigstens 2 und/oder maximal 5, insbesondere gleich 2 oder gleich 3, ist und/oder dass andererseits die Dicke **D** der Fluidschicht (13) oder des Festkörpers (14) minimal 0,4 mm oder minimal 1,0 mm und/oder maximal 5 mm oder maximal 3,5 mm ist.

14. Verfahren zur Ermittlung einer Messgröße, wobei eine Messeinrichtung (1) verwendet wird, die einen ersten und zweiten Ultraschallwandler (2, 3) und einen Wellenleiter (6) umfasst, insbesondere eine Messeinrichtung (1) nach einem der vorangehenden Ansprüche, wobei der erste Ultraschallwandler (2) durch eine Steuereinrichtung (4) der Messeinrichtung (1) derart angesteuert wird, dass er eine geführte Welle (5) mit einer vorgegebenen Schwingungsfrequenz **f** in dem Wellenleiter (6) derart anregt, dass die geführte Welle (5) sich in dem Wellenleiter (6) parallel zu einer Rückfläche (7) des Wellenleiters (6) ausbreitet, wobei die Steuereinrichtung (4) die Messgröße in Abhängigkeit eines Empfangssignals (10, 11, 12) des zweiten Ultraschallwandlers (3) ermittelt, wobei das Empfangssignal (10, 11, 12) von unmittelbar und/oder mittelbar durch die geführte Welle (5) verursachten Schwingungen des zweiten Ultraschallwandlers (3) abhängt, **dadurch ge-**

**kennzeichnet, dass** die Rückfläche (7) des Wellenleiters (6) zumindest in einem Wellenführungsabschnitt (8, 30, 31) des Wellenleiters (6) einer Reflexionsfläche (9) der Messeinrichtung (1) zugewandt und von dieser durch einen Zwischenraum (15) beabstandet ist, wobei zumindest während der Ermittlung der Messgröße eine Fluidschicht (13) oder ein Festkörper (14) den Zwischenraum (15) zwischen dem Wellenleiter (6) und der Reflexionsfläche (9) zumindest im Wellenführungsabschnitt (8, 30, 31) des Wellenleiters (6) ausfüllt, wobei der Abstand (16) zwischen der Rückfläche (7) und der Reflexionsfläche (9) und somit die Dicke **D** der Fluidschicht (13) oder des Festkörpers (14) zumindest in dem Wellenführungsabschnitt (8, 30, 31) den Zusammenhang

$$D = \frac{2(n \pm \Delta) - 1}{4f\sqrt{\dfrac{1}{c_f^2} - \dfrac{1}{c_{ph}^2}}}$$

mit der Schwingungsfrequenz **f**, der Schallgeschwindigkeit **c$_f$** in der Fluidschicht (13) oder dem Festkörper (14) und der Phasengeschwindigkeit **c$_{ph}$** im Wellenleiter aufweist, wobei die Auslegungsvariable **n** eine ganze positive Zahl und die Abweichung $\Delta$ einerseits gleich Null oder andererseits positiv und kleiner als 0,7 oder als 0,5 ist.

**Claims**

1. Measuring device (1) for establishing a measurement quantity, having a first and second ultrasound transducer (2, 3), a control device (4) which is adapted to control the first ultrasound transducer (2) in such a way that the first ultrasound transducer (2) excites a guided wave (5) having a predetermined oscillation frequency f in a waveguide (6), coupled in oscillation to the first ultrasound transducer (2), of the measuring device (1) so that the guided wave (5) propagates in the waveguide (6) parallel to a rear face (7) of the waveguide (6), the control device (4) being adapted to establish the measurement quantity as a function of a reception signal (10, 11, 12) of the second ultrasound transducer (3), the reception signal (10, 11, 12) depending on oscillations, caused directly and/or indirectly by the guided wave (5), of the second ultrasound transducer (3),

    **characterized in that** the rear face (7) of the waveguide (6), at least in a wave guiding section (8, 30, 31) of the waveguide (6), faces towards a reflection face (9) of the measuring device (1) and is separated therefrom by an intermediate space (15), the measuring device (1) being configured in such a way that, at least during the establishment of the measurement quantity, a fluid layer (13) or a solid body (14) fills the intermediate space (15) between the waveguide (6) and the reflection face (9) at least in the wave guiding section (8, 30, 31) of the waveguide (6), the distance (16) between the rear face (7) and the reflection face (9), and therefore the thickness D of the fluid layer (13) or of the solid body (14), at least in the wave guiding section (8, 30, 31), having the relationship

$$D = \frac{2(n \pm \Delta) - 1}{4f \sqrt{\dfrac{1}{c_f^2} - \dfrac{1}{c_{ph}^2}}}$$

with the oscillation frequency f, the speed of sound cf in the fluid layer (13) or the solid body (14) and the phase velocity cph in the waveguide (6), the configuration variable n being a positive integer and the deviation $\Delta$ being on the one hand equal to zero or on the other hand positive and less than 0.7 or than 0.5.

2. Measuring device according to Claim 1, **characterized in that** it is used to measure a property of a fluid (27) or a flow of the fluid (27), the waveguide (6) being arranged in a measurement volume (28) which receives or guides the fluid (27), in such a way that a front face (29) of the waveguide (6), opposite the rear face (7), contacts the fluid (27) in the measurement volume (28) during the measurement operation, in order to couple pressure waves (25) into the fluid (27), and/or the front face (29) forming a side wall (38) of the measurement volume (28).

3. Measuring device according to Claim 2, **characterized in that** the intermediate space (15) between the waveguide (6) and the reflection face (9) is fluidically coupled to the measurement volume (28), so that the fluid (27) introduced into the measurement volume (28) and/or located therein can enter the intermediate space (15) in order to form the fluid layer (13).

4. Measuring device according to Claim 3, **characterized in that** at least a part of the measurement volume (28) is formed by a measurement channel (35) which, apart from a channel inflow (36) and a channel outflow (37), is closed in a fluid-tight manner, a side wall (38) of the measurement channel (35) being formed at least locally by the front face (29) of the waveguide (6), the measurement channel (35) being fluidically coupled to the intermediate space (15) between the rear face (7) of the waveguide (6) and the reflection face (9) exclusively by means of the channel inflow (36) and/or the channel outflow (37).

5. Measuring device according to Claim 4, **characterized in that** the measurement channel (35) torically encircles a fluid outlet (23) of the measuring device (1), the fluid (27) being deliverable to the channel inflow (36) via a ramp (39) from a fluid feed (22) of the measuring device (1), in particular lying below the measurement channel (35) in the installed state of the measuring device (1), the channel outflow (37) opening into the fluid outlet (23), the intermediate space (15) forming, between the waveguide (6) and the reflection face (9), a bypass channel (24) which at least locally encloses the measurement channel (35) torically, and connects the fluid feed (22) to a connecting volume (40), in particular arranged above the measurement channel (35) in the installed state of the measuring device (1), which opens into the fluid outlet (23).

6. Measuring device according to Claim 5, **characterized in that** the connecting volume (40) is connected to the fluid outlet (23) via a throttle channel (41) or a plurality of throttle channels (41), the flow cross section of the throttle channel (41) or the sum of the flow cross sections of the throttle channels (41) being less than the flow cross section of the bypass channel (24) formed by the intermediate space (15) or than the sum of the flow cross sections of this bypass channel (24) and at least one further bypass channel (43), which connects the fluid feed (22) to the connecting volume (40) .

7. Measuring device according to Claim 2 or 3, **characterized in that** the wave guiding section (8, 30, 31) of the waveguide (6) or a subsection of the wave guiding section (8, 30, 31) lies freely in the measurement volume (28) and the fluid (27) can therefore flow around it.

8. Measuring device according to Claim 1 or 2, **characterized in that** the intermediate space (15) between the waveguide (6) and the reflection face (9) is filled by the solid body (14) at least in the wave guiding section (8, 30, 31) of the waveguide (6), and/or the intermediate space (15) is closed in a fluid-tight manner from the environment of the measuring device (1), and in particular from the measurement volume (28), so that the thickness D of the solid body (14) or of the fluid layer (13) depends on the pressure at the or a front face (29) of the waveguide, facing away from the rear face (7), the pressure being established as the measurement quantity.

9. Measuring device according to one of Claims 2 to 8, **characterized in that** the control device (4) is adapted to record a first and second reception signal (10, 11, 12) of the second ultrasound transducer (3) chronologically in succession, in such a way that the first reception signal (10, 11, 12) depends on oscillations of the second ultrasound transducer (3) which are excited directly or indirectly by a pressure wave excited by the guided wave (5) in the fluid layer (13) or in the solid body (14) or which are excited directly by the guided wave (5) in the waveguide (6), and that the second reception signal (10, 11, 12) depends on oscillations of the second ultrasound transducer (3) which are excited directly or indirectly by a pressure wave (25) excited by the guided wave (5) in the fluid (27) in the measurement volume (28), and on the one hand to establish the measurement quantity as a function of the first and second reception signal (10, 11, 12) or on the other hand to establish the measurement quantity, in particular a pressure in the measurement volume (28) and/or a temperature and/or density of the fluid layer (13) or of the solid body (14), as a function of the first reception signal (10, 11, 12) and a further measurement quantity, in particular a flow velocity or a volume flow of the fluid (27), as a function of the second reception signal (10, 11, 12).

10. Measuring device according to one of the preceding claims, **characterized in that** the intermediate space (15) between the waveguide (6) and the reflection face (9) is closed in a fluid-tight manner from the environment of the measuring device (1) and/or from the measurement volume (28), in particular by a housing (18) of the measuring device (1).

11. Measuring device according to one of the preceding claims, **characterized in that** the measuring device (1) is configured in such a way that, at least during the establishment of the measurement quantity, the or a further fluid layer (13) or the or a further solid body (14) fills a further intermediate space between a further wave guiding section (31) of the rear face (7) of the waveguide (6) and a further reflection face, the waveguide (6) being supported in an intermediate section (32) of the waveguide (6), lying between the wave guiding section and the further wave guiding section (30, 31) of the waveguide (6), by a component (17) of the measuring device (1), in particular the component (20) forming the reflection face (9), which has a higher specific acoustic impedance than the fluid layer and/or the further fluid layer (13) or the solid body and/or the further solid body (14).

12. Measuring device according to one of the preceding claims, **characterized in that** the solid body (14) or the fluid layer (13) and/or the fluid (27) have a lower specific acoustic impedance than the waveguide (6) and/or a component (20) of the measuring device (1) forming the reflection face (9), and/or **in that** the solid body (14) or the fluid layer (13) has a specific acoustic impedance of at least 105 Ns/m$^3$ or at least 106 Ns/m$^3$.

13. Measuring device according to one of the preceding claims, **characterized in that** on the one hand the configuration variable n is at least 2 and/or at most 5, in particular equal to 2 or equal to 3, and/or **in that** on the other hand the thickness D of the fluid layer (13) or of the solid body (14) is at least 0.4 mm or at least 1.0 mm and/or at most 5 mm or at most 3.5 mm.

14. Method for establishing a measurement quantity, a measuring device (1) which comprises a first and second ultrasound transducer (2, 3) and a waveguide (6), in particular a measuring device (1) according to one of the preceding claims, being used, the first ultrasound transducer (2) being controlled by a control device (4) of the measuring device (1) in such a way that it excites a guided wave (5) having a predetermined oscillation frequency f in the waveguide (6) so that the guided wave (5) propagates in the waveguide (6) parallel to a rear face (7) of the waveguide (6), the control device (4) establishing the measurement quantity as a function of a reception signal (10, 11, 12) of the second ultrasound transducer (3), the reception signal (10, 11, 12) depending on oscillations, caused directly and/or indirectly by the guided wave (5), of the second ultrasound transducer (3),

**characterized in that** the rear face (7) of the waveguide (6), at least in a wave guiding section (8, 30, 31) of the waveguide (6), faces towards a reflection face (9) of the measuring device (1) and is separated therefrom by an intermediate space (15), a fluid layer (13) or a solid body (14), at least during the establishment of the measurement quantity, filling the intermediate space (15) between the waveguide (6) and the reflection face (9) at least in the wave guiding section (8, 30, 31) of the waveguide (6), the distance (16) between the rear face (7) and the reflection face (9), and therefore the thickness D of the fluid layer (13) or of the solid body (14), at least in the wave guiding section (8, 30, 31), having the relationship

$$D = \frac{2(n \pm \Delta) - 1}{4f \sqrt{\dfrac{1}{c_f^2} - \dfrac{1}{c_{ph}^2}}}$$

with the oscillation frequency f, the speed of sound $c_f$ in the fluid layer (13) or the solid body (14) and the phase velocity $c_{ph}$ in the waveguide, the configuration variable n being a positive integer and the deviation ∆ being on the one hand equal to zero or on the other hand positive and less than 0.7 or than 0.5.

## Revendications

1. Dispositif de mesure (1) destiné à déterminer une grandeur de mesure, comprenant un premier et un deuxième transducteur d'ultrasons (2, 3), un dispositif de commande (4), qui est conçu pour commander le premier transducteur d'ultrasons (2) de telle sorte que premier transducteur d'ultrasons (2) excite une onde guidée (5) ayant une fréquence d'oscillation f prédéfinie dans un guide d'ondes (6) du dispositif de mesure (1) couplé en oscillation avec le premier transducteur d'ultrasons (2), de telle sorte que l'onde guidée (5) se propage dans le guide d'ondes (6) parallèlement à une surface arrière (7) du guide d'ondes (6), le dispositif de commande (4) étant conçu pour déterminer la grandeur de mesure en fonction d'un signal reçu (10, 11, 12) du deuxième transducteur d'ultrasons (3), le signal reçu (10, 11, 12) dépendant des oscillations du deuxième transducteur d'ultrasons (3) provoquées directement et/ou indirectement par l'onde guidée (5),

> **caractérisé en ce que** la surface arrière (7) du guide d'ondes (6), au moins dans une portion de guidage d'ondes (8, 30, 31) du guide d'ondes (6), fait face à une surface de réflexion (9) du dispositif de mesure (1) et est espacée de celle-ci par un espace intermédiaire (15), le dispositif de mesure (1) étant conçu de telle sorte qu'au moins pendant la détermination de la grandeur de mesure, une couche de fluide (13) ou un corps solide (14) remplit l'espace intermédiaire (15) entre le guide d'ondes (6) et la surface de réflexion (9) au moins dans la portion de guidage d'ondes (8, 30, 31) du guide d'ondes (6), l'écart (16) entre la surface arrière (7) et la surface de réflexion (9) et ainsi l'épaisseur D de la couche de fluide (13) ou du corps solide (14) au moins dans la portion de guidage d'ondes (8, 30, 31) présentant la relation

$$D = \frac{2(n \pm \Delta) - 1}{4f\sqrt{\dfrac{1}{c_f^2} - \dfrac{1}{c_{ph}^2}}}$$

> avec la fréquence d'oscillation f, la vitesse du son $c_f$ dans la couche de fluide (13) ou le corps solide (14) et la vitesse de phase $c_{ph}$ dans le guide d'ondes (6), la variable de conception n étant un nombre entier positif et l'écart ∆ étant d'une part égal à zéro ou d'autre part positif et inférieur à 0,7 ou à 0,5.

2. Dispositif de mesure selon la revendication 1, **caractérisé en ce qu'**il sert à mesurer une propriété d'un fluide (27) ou un écoulement du fluide (27), le guide d'ondes (6) étant disposé dans un volume de mesure (28) qui accueille ou guide le fluide (27) de telle sorte qu'une surface avant (29) du guide d'ondes (6), qui est à l'opposé de la surface arrière (7), entre en contact avec le fluide (27) dans le volume de mesure (28) en mode de mesure afin d'injecter dans le fluide (27) des ondes de pression (25) et/ou la surface avant (29) forme une paroi latérale (38) du volume de mesure (28).

3. Dispositif de mesure selon la revendication 2, **caractérisé en ce que** l'espace intermédiaire (15) entre le guide d'ondes (6) et la surface de réflexion (9) est couplé fluidiquement au volume de mesure (28), de sorte que le fluide (27) introduit dans le volume de mesure (28) et/ou qui s'y trouve peut pénétrer dans l'espace intermédiaire (15) afin de former la couche de fluide (13) .

4. Dispositif de mesure selon la revendication 3, **caractérisé en ce qu'**au moins une partie du volume de mesure (28) est formée par un canal de mesure (35), lequel est fermé de manière étanche aux fluides à l'exception d'une admission de canal (36) et d'une décharge de canal (37), une paroi latérale (38) du canal de mesure (35) est, au moins dans certaines portions, formée par la surface avant (29) du guide d'ondes (6), le canal de mesure (35) étant couplé fluidiquement à l'espace intermédiaire (15) entre la surface arrière (7) du guide d'ondes (6) et la surface de réflexion (9) exclusivement par le biais de l'admission de canal (36) et/ou de la décharge de canal (37).

5. Dispositif de mesure selon la revendication 4, **caractérisé en ce que** le canal de mesure (35) circule autour d'une sortie de fluide (23) du dispositif de mesure (1) à la manière d'un tore, le fluide (27) pouvant être acheminé à l'admission de canal (36) par le biais d'une rampe (39) d'une arrivée de fluide (22) du dispositif de mesure (1) qui se trouve au-dessous du canal de mesure (35), notamment à l'état monté du dispositif de mesure (1), la décharge de canal (37) débouchant dans la sortie de fluide (23), l'espace intermédiaire (15) entre le guide d'ondes (6) et la surface de réflexion (9) formant un canal de contournement (24) qui entoure le canal de mesure (35) à la manière d'un tore au moins dans certaines portions et relie l'arrivée de fluide (22) à un volume de liaison (40) disposé au-dessus du canal de mesure (35), notamment à l'état monté du dispositif de mesure (1), lequel débouche dans la sortie de fluide (23).

**6.** Dispositif de mesure selon la revendication 5, **caractérisé en ce que** le volume de liaison (40) est relié à la sortie de fluide (23) par le biais d'un canal d'étranglement (41) ou de plusieurs canaux d'étranglement (41), la section transversale d'écoulement du canal d'étranglement (41) ou la somme des sections transversales d'écoulement des canaux d'étranglement (41) étant inférieure à la section transversale d'écoulement du canal de contournement (24) formé par l'espace intermédiaire (15) ou que la somme des sections transversales d'écoulement de ce canal de contournement (24) et d'au moins un canal de contournement supplémentaire (43) qui relie l'arrivée de fluide (22) au volume de liaison (40).

**7.** Dispositif de mesure selon la revendication 2 ou 3, **caractérisé en ce que** la portion de guidage d'ondes (8, 30, 31) du guide d'ondes (6) ou une portion partielle de la portion de guidage d'ondes (8, 30, 31) repose librement dans le volume de mesure (28) et peut ainsi être entourée par le courant du fluide (27).

**8.** Dispositif de mesure selon la revendication 1 ou 2, **caractérisé en ce que** l'espace intermédiaire (15) entre le guide d'ondes (6) et la surface de réflexion (9), au moins dans la portion de guidage d'ondes (8, 30, 31) du guide d'ondes (6), est rempli par le corps solide (14) et/ou l'espace intermédiaire (15) est fermé de manière étanche aux fluides par rapport à l'environnement du dispositif de mesure (1), et notamment par rapport au volume de mesure (28), de sorte que l'épaisseur D du corps solide (14) ou de la couche de fluide (13) dépend de la pression au niveau de la ou d'une surface avant (29) du guide d'ondes tournée à l'opposé de la surface arrière (7), la pression étant déterminée comme la grandeur de mesure.

**9.** Dispositif de mesure selon l'une des revendications 2 à 8, **caractérisé en ce que** le dispositif de commande (4) est conçu pour acquérir chronologiquement l'un après l'autre un premier et un deuxième signal reçu (10, 11, 12) du deuxième transducteur d'ultrasons (3) de telle sorte que le premier signal reçu (10, 11, 12) dépend des oscillations du deuxième transducteur d'ultrasons (3) qui sont excitées directement ou indirectement par une onde de pression excitée par l'onde guidée (5) dans la couche de fluide (13) ou dans le corps solide (14) ou qui sont excitées directement par l'onde guidée (5) dans le guide d'ondes (6), et que le deuxième signal reçu (10, 11, 12) dépend des oscillations du deuxième transducteur d'ultrasons (3) qui sont excitées directement ou indirectement par une onde de pression (25) excitée par l'onde guidée (5) dans le fluide (27) dans le volume de mesurer (28), et d'une part pour déterminer la grandeur de mesure en fonction du premier et du deuxième signal reçu (10, 11, 12) ou, d'autre part, pour déterminer la grandeur de mesure, notamment une pression dans le volume de mesure (28) et/ou une température et/ou densité de la couche de fluide (13) ou du corps solide (14) en fonction du premier signal reçu (10, 11, 12) et d'une grandeur de mesure supplémentaire, notamment une vitesse d'écoulement un ou débit volumique du fluide (27), en fonction du deuxième signal reçu (10, 11, 12).

**10.** Dispositif de mesure selon l'une des revendications précédentes, **caractérisé en ce que** l'espace intermédiaire (15) entre le guide d'ondes (6) et la surface de réflexion (9) est fermé de manière étanche aux fluides, notamment par un boîtier (18) du dispositif de mesure (1), par rapport à l'environnement du dispositif de mesure (1) et/ou au volume de mesure (28).

**11.** Dispositif de mesure selon l'une des revendications précédentes, **caractérisé en ce que** le dispositif de mesure (1) est conçu de telle sorte qu'au moins pendant la détermination de la grandeur de mesure, la ou une couche de fluide (13) supplémentaire ou le ou un corps solide (14) supplémentaire remplit un espace intermédiaire supplémentaire entre une portion de guidage d'ondes supplémentaire (31) de la surface arrière (7) du guide d'ondes (6) et une surface de réflexion supplémentaire, le guide d'ondes (6) étant soutenu dans une portion intermédiaire (32) du guide d'ondes (6) qui se trouve entre la portion de guidage d'ondes et la supplémentaire (30, 31) du guide d'ondes (6) par un composant (17) du dispositif de mesure (1), notamment le composant (20) qui forme la surface de réflexion (9), lequel présente une impédance de champ acoustique supérieure à celle de la couche de fluide (13) et/ou la supplémentaire ou du corps solide (14) et/ou du supplémentaire.

**12.** Dispositif de mesure selon l'une des revendications précédentes, **caractérisé en ce que** le corps solide (14) ou la couche de fluide (13) et/ou le fluide (27) présentent une impédance de champ acoustique inférieure à celle du guide d'ondes (6) et/ou d'un composant (20) du dispositif de mesure (1) formant la surface de réflexion (9) et/ou **en ce que** le corps solide (14) ou la couche de fluide (13) présentent une impédance de champ acoustique d'au moins $10^5$ Ns/m$^3$ ou d'au moins $10^6$ Ns/m$^3$.

**13.** Dispositif de mesure selon l'une des revendications précédentes, **caractérisé en ce que** d'une part la variable de conception n est au moins égale à 2 et/ou au maximum à 5, notamment égale à 2 ou égale à 3 et/ou **en ce que** d'autre part l'épaisseur (D) de la couche de fluide (13) ou du corps solide (14) est au minimum de 0,4 mm ou au minimum de 1,0 mm et/ou au maximum de 5 mm ou au maximum de 3,5 mm.

14. Procédé de détermination d'une grandeur de mesure, un dispositif de mesure (1) étant utilisé, lequel comprend un premier et un deuxième transducteur d'ultrasons (2, 3) et un guide d'ondes (6), notamment un dispositif de mesure (1) selon l'une des revendications précédentes, le premier transducteur d'ultrasons (2) étant commandé par un dispositif de commande (4) du dispositif de mesure (1) de telle sorte qu'il excite une onde guidée (5) ayant une fréquence d'oscillation f prédéfinie dans le guide d'ondes (6), de telle sorte que l'onde guidée (5) se propage dans le guide d'ondes (6) parallèlement à une surface arrière (7) du guide d'ondes (6), le dispositif de commande (4) déterminant la grandeur de mesure en fonction d'un signal reçu (10, 11, 12) du deuxième transducteur d'ultrasons (3), le signal reçu (10, 11, 12) dépendant des oscillations du deuxième transducteur d'ultrasons (3) provoquées directement et/ou indirectement par l'onde guidée (5),

caractérisé en ce que la surface arrière (7) du guide d'ondes (6), au moins dans une portion de guidage d'ondes (8, 30, 31) du guide d'ondes (6), fait face à une surface de réflexion (9) du dispositif de mesure (1) et est espacée de celle-ci par un espace intermédiaire (15), une couche de fluide (13) ou un corps solide (14), au moins pendant la détermination de la grandeur de mesure, remplissant l'espace intermédiaire (15) entre le guide d'ondes (6) et la surface de réflexion (9) au moins dans la portion de guidage d'ondes (8, 30, 31) du guide d'ondes (6), l'écart (16) entre la surface arrière (7) et la surface de réflexion (9) et ainsi l'épaisseur D de la couche de fluide (13) ou du corps solide (14) au moins dans la portion de guidage d'ondes (8, 30, 31) présentant la relation

$$D = \frac{2(n \pm \Delta) - 1}{4f\sqrt{\dfrac{1}{c_f^2} - \dfrac{1}{c_{ph}^2}}}$$

avec la fréquence d'oscillation f, la vitesse du son $c_f$ dans la couche de fluide (13) ou le corps solide (14) et la vitesse de phase $c_{ph}$ dans le guide d'ondes, la variable de conception n étant un nombre entier positif et l'écart $\Delta$ étant d'une part égal à zéro ou d'autre part positif et inférieur à 0,7 ou à 0,5.

FIG. 1

FIG. 2

FIG. 3

FIG. 4

FIG. 5

FIG. 6

## FIG. 7

## FIG. 8

FIG. 9

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2020106343 A

- DE 102020002834 A1